# EUROPEAN PATENT SPECIFICATION

(11) **EP 2 363 517 B1**
(45) Date of publication and mention of the grant of the patent: **18.07.2018**
(21) Application number: 10192073.4
(22) Date of filing: 16.01.2007
(51) Int. Cl.: D01F 8/14, D04H 3/00, C08G 63/688

(54) **WATER-DISPERSIBLE SULPHOPOLYESTERS FOR MULTICOMPONENT FIBRES**
WASSERDISPERGIERBARE SULFOPOLYESTER FÜR MEHRKOMMPONENTENFASERN
FIBRES A MULTICOMPOSANTS DERIVEES DE SULFOPOLYESTERS DISPERSIBLES DANS L'EAU

(30) Priority: 31.01.2006 US 344320
(43) Date of publication of application: 07.09.2011
(62) Divisional of application: 07716653.6
(73) Proprietor: EASTMAN CHEMICAL COMPANY, Kingsport TN 37660 (US)
(72) Inventor: George, Scott Ellery, Kingsport, TN 37664 (US); Klosiewicz, Daniel William, Kingsport, TN 37664 (US); Seo, Kab Sik, Kingsport, TN 37664 (US); Fleenor, Coralie McKenna, Rogersville, TN 37857 (US); Crain, Allen Lynn, Kingsport, TN 37664 (US); Gupta, Rakesh Kumar, Kingsport, TN 37664 (US)
(74) Representative: Best, Michael

(56) References cited:
- EP-A1- 1 731 634
- US-A- 4 104 262
- US-A- 5 242 640
- US-A- 5 369 210
- US-A- 5 369 211
- US-A- 5 571 620
- US-A- 6 120 889
- US-A1- 2004 258 910
- US-A1- 2006 194 047
- DATABASE WPI Week 200450 Thomson Scientific, London, GB; AN 2004-520211 XP002639794, -& JP 2004 137418 A 13 May 2004 (2004-05-13)

## Description

### FIELD OF THE INVENTION

The present invention pertains to water-dispersible fibers and fibrous articles comprising a sulfopolyester. The invention further pertains to multicomponent fibers comprising a sulfopolyester and the microdenier fibers and fibrous articles prepared therefrom. The invention also pertains to processes for water-dispersible, multicomponent, and microdenier fibers and to nonwoven fabrics prepared therefrom. The fibers and fibrous articles have applications in flushable personal care products and medical products. The present application is a divisional application of the International application WO 2007/089423 according to EP 1 941 084.

### BACKGROUND OF THE INVENTION

Fibers, melt blown webs and other melt spun fibrous articles have been made from thermoplastic polymers, such as poly(propylene), polyamides, and polyesters. One common application of these fibers and fibrous articles are nonwoven fabrics and, in particular, in personal care products such as wipes, feminine hygiene products, baby diapers, adult incontinence briefs, hospital/surgical and other medical disposables, protective fabrics and layers, geotextiles, industrial wipes, and filter media. Unfortunately, the personal care products made from conventional thermoplastic polymers are difficult to dispose of and are usually placed in landfills. One promising alternative method of disposal is to make these products or their components "flushable", i.e., compatible with public sewerage systems. The use of water-dispersible or water-soluble materials also improves recyclability and reclamation of personal care products. The various thermoplastic polymers now used in personal care products are not inherently water-dispersible or soluble and, hence, do not produce articles that readily disintegrate and can be disposed of in a sewerage system or recycled easily.

The desirability of flushable personal care products has resulted in a need for fibers, nonwovens, and other fibrous articles with various degrees of water-responsivity. Various approaches to addressing these needs have been described, for example, in U.S. Patent No.'s 6,548,592; 6,552,162; 5,281,306; 5,292,581; 5,935,880; and 5,509,913; U.S. Patent Application Serial No.'s 09/775,312; and 09/752,017; and PCT International Publication No. WO 01/66666 A2. These approaches, however, suffer from a number of disadvantages and do not provide a fibrous article, such as a fiber or nonwoven fabric, that possesses a satisfactory balance of performance properties, such as tensile strength, absorptivity, flexibility, and fabric integrity under both wet or dry conditions.

For example, typical nonwoven technology is based on the multidirectional deposition of fibers that are treated with a resin binding adhesive to form a web having strong integrity and other desirable properties. The resulting assemblies, however, generally have poor water-responsivity and are not suitable for flushable applications. The presence of binder also may result in undesirable properties in the final product, such as reduced sheet wettability, increased stiffness, stickiness, and higher production costs. It is also difficult to produce a binder that will have adequate wet strength during use and yet disperse quickly upon disposal. Thus, nonwoven assemblies using these binders may either disintegrate slowly under ambient conditions or have less than adequate wet strength properties in the presence of body fluids. To address this problem, pH and ion-sensitive water-dispersible binders, such as lattices containing acrylic or methacrylic acid with or without added salts, are known and described, for example, in U.S. Patent No. 6,548,592 B1. Ion concentrations and pH levels in public sewerage and residential septic systems, however, can vary widely among geographical locations and may not be sufficient for the binder to become soluble and disperse. In this case, the fibrous articles will not disintegrate after disposal and can clog drains or sewer laterals.

Multicomponent fibers containing a water-dispersible component and a thermoplastic water non-dispersible component have been described, for example, in U.S. Patent No.'s 5,916,678; 5,405,698; 4,966,808; 5,525282; 5,366,804; 5,486,418. For example, these multicomponent fibers may be a bicomponent fiber having a shaped or engineered transverse cross section such as, for example, an islands-in-the-sea, sheath core, side-by-side, or segmented pie configuration. In EP 1 731 634, which has been published December 13, 2006 and pursuant to Article 54(3) EPC, islands-in-sea type composite fibers are described. The multicomponent fiber can be subjected to water or a dilute alkaline solution where the water-dispersible component is dissolved away to leave the water non-dispersible component behind as separate, independent fibers of extremely small fineness. Polymers which have good water dispersibility, however, often impart tackiness to the resulting multicomponent fibers, which causes the fiber to stick together, block, or fuse during winding or storage after several days, especially under hot, humid conditions. To prevent fusing, often a fatty acid or oil-based finish is applied to the surface of the fiber. In addition, large proportions of pigments or fillers are sometimes added to water dispersible polymers to prevent fusing of the fibers as described, for example, in U.S. Patent No. 6,171,685. Such oil finishes, pigments, and fillers require additional processing steps and can impart undesirable properties to the final fiber. Many water-dispersible polymers also require alkaline solutions for their removal which can cause degradation of the other polymer components of the fiber such as, for example, reduction of inherent viscosity, tenacity, and melt strength. Further, some water-dispersible polymers can not withstand exposure to water during hydroentanglement and, thus, are not suitable for the manufacture of nonwoven webs and fabrics.

Alternatively, the water-dispersible component may serve as a bonding agent for the thermoplastic fibers in nonwoven webs. Upon exposure to water, the fiber to fiber bonds come apart such that the nonwoven web loses its integrity and breaks down into individual fibers. The thermoplastic fiber components of these nonwoven webs, however, are not water-dispersible and remain present in the aqueous medium and, thus, must eventually be removed from municipal wastewater treatment plants. Hydroentanglement may be used to produce disintegratable nonwoven fabrics without or with very low levels (< 5 wt%) of added binder to hold the fibers together. Although these fabrics may disintegrate upon disposal, they often utilize fibers that are not water soluble or water-dispersible and may result in entanglement and plugging within sewer systems. Any added water-dispersible binders also must be minimally affected by hydroentangling and not form gelatinous buildup or cross-link, and thereby contribute to fabric handling or sewer related problems.

A few water-soluble or water-dispersible polymers are available, but are generally not applicable to melt blown fiber forming operations or melt spinning in general. Polymers, such as polyvinyl alcohol, polyvinyl pyrrolidone, and polyacrylic acid are not melt processable as a result of thermal decomposition that occurs at temperatures below the point where a suitable melt viscosity is attained. High molecular weight polyethylene oxide may have suitable thermal stability, but would provide a high viscosity solution at the polymer interface resulting in a slow rate of disintegration. Water-dispersible sulfopolyesters have been described, for example, in U.S. Patent No.'s 6,171,685; 5,543,488; 5,853,701; 4,304,901; 6,211,309; 5,570,605; 6,428,900; and 3,779,993. Typical sulfopolyesters, however, are low molecular weight thermoplastics that are brittle and lack the flexibility to withstand a winding operation to yield a roll of material that does not fracture or crumble. Sulfopolyesters also can exhibit blocking or fusing during processing into film or fibers, which may require the use of oil finishes or large amounts of pigments or fillers to avoid. Low molecular weight polyethylene oxide (more commonly known as polyethylene glycol) is a weak/brittle polymer that also does not have the required physical properties for fiber applications. Forming fibers from known water-soluble polymers via solution techniques is an alternative, but the added complexity of removing solvent, especially water, increases manufacturing costs.
Accordingly, there is a need for a water-dispersible fiber and fibrous articles prepared therefrom that have adequate tensile strength, absorptivity, flexibility, and fabric integrity in the presence of moisture, especially upon exposure to human bodily fluids. In addition, a fibrous article is needed that does not require a binder and completely disperses or dissolves in residential or municipal sewerage systems. Potential uses include, melt blown webs, spunbond fabrics, hydroentangled fabrics, dry-laid non-wovens, bicomponent fiber components, adhesive promoting layers, binders for cellulosics, flushable nonwovens and films, dissolvable binder fibers, protective layers, and carriers for active ingredients to be released or dissolved in water. There is also a need for multicomponent fiber having a water-dispersible component that does not have excessive blocking or fusing of filaments during spinning operations, is easily removed by hot water at neutral or slightly acidic pH, and is suitable for hydroentangling processes to manufacture nonwoven fabrics. Other extrudable and melt spun fibrous materials are also possible.

### SUMMARY OF THE INVENTION

We have unexpectedly discovered that flexible, water-dispersible fibers may be prepared from sulfopolyesters. The present invention provides a water-dispersible sulfopolyester having a glass transition temperature (Tg) of at least 40°C, measured using differential scanning calorimetry, and a melt viscosity of less than 1200 Pa·s (12,000 poise) measured at 240°C at a strain rate of 1 rad/sec and which comprises less than 25 mole % of residues of at least one sulfomonomer, based on the total moles of diacid or diol residues.

Prefered embodiments of the sulfopolyester of the present invention are defined in the dependent claims.

The fibers as described herein may be unicomponent fibers that rapidly disperse or dissolve in water and may be produced by melt-blowing or melt-spinning. The fibers may be prepared from a single sulfopolyester or a blend of the sulfopolyester with a water-dispersible or water non-dispersible polymer. Thus, the fiber as described herein, optionally, may include a water-dispersible polymer blended with the sulfopolyester. In addition, the fiber may optionally include a water non-dispersible polymer blended with the sulfopolyester, provided that the blend is an immiscible blend. Our invention also includes fibrous articles comprising our water-dispersible fibers. Thus, the fibers of our invention may be used to prepare various fibrous articles, such as yarns, melt-blown webs, spunbonded webs, and nonwoven fabrics that are, in turn, water-dispersible or flushable. Staple fibers of our invention can also be blended with natural or synthetic fibers in paper, nonwoven webs, and textile yarns.

Another aspect as described herein is a water-dispersible fiber comprising:
(A) a sulfopolyester having a glass transition temperature (Tg) of at least 25°C, the sulfopolyester comprising:
   (i) 50 to 96 mole% of one or more residues of isophthalic acid or terephthalic acid, based on the total acid residues;
   (ii) 4 to 30 mole%, based on the total acid residues, of a residue of sodiosulfoisophthalic acid;
   (iii) one or more diol residues wherein at least 25 mole%, based on the total diol residues, is a poly(ethylene glycol) having a structure

      H-(OCH2-CH2)n-OH

      wherein n is an integer in the range of 2 to 500;
   (iv) 0 to 20 mole%, based on the total repeating units, of residues of a branching monomer having 3 or more functional groups wherein the functional groups are hydroxyl, carboxyl, or a combination thereof;
(B) optionally, a first water-dispersible polymer blended with the sulfopolyester; and
(C) optionally, a water non-dispersible polymer blended with the sulfopolyester to form a blend with the proviso that the blend is an immiscible blend;
wherein the fiber contains less than 10 weight percent of a pigment or filler, based on the total weight of the fiber.
The water-dispersible, fibrous articles of the present invention include personal care articles such as, for example, wipes, gauze, tissue, diapers, training pants, sanitary napkins, bandages, wound care, and surgical dressings. In addition to being water-dispersible, the fibrous articles of our invention are flushable, that is, compatible with and suitable for disposal in residential and municipal sewerage systems.

The present invention also provides a multicomponent fiber comprising a water-dispersible sulfopolyester and one or more water non-dispersible polymers. The fiber has an engineered geometry such that the water non-dispersible polymers are present as segments substantially isolated from each other by the intervening sulfopolyester, which acts as a binder or encapsulating matrix for the water non-dispersible segments. Thus, another aspect as described herein is a multicomponent fiber having a shaped cross section, comprising:
(A) a water dispersible sulfopolyester having a glass transition temperature (Tg) of at least 57°C, the sulfopolyester comprising:
   (i) residues of one or more dicarboxylic acids;
   (ii) 4 to 40 mole%, based on the total repeating units, of residues of at least one sulfomonomer having 2 functional groups and one or more sulfonate groups attached to an aromatic or cycloaliphatic ring wherein the functional groups are hydroxyl, carboxyl, or a combination thereof;
   (iii) one or more diol residues wherein at least 25 mole%, based on the total diol residues, is a poly(ethylene glycol) having a structure

      H-(OCH₂-CH₂)ₙ-OH

      wherein n is an integer in the range of 2 to 500; and
   (iv) 0 to 25 mole%, based on the total repeating units, of residues of a branching monomer having 3 or more functional groups wherein the functional groups are hydroxyl, carboxyl, or a combination thereof; and
(B) a plurality of segments comprising one or more water non-dispersible polymers immiscible with the sulfopolyester, wherein the segments are substantially isolated from each other by the sulfopolyester intervening between the segments;
   wherein the fiber contains less than 10 weight percent of a pigment or filler, based on the total weight of the fiber.

The sulfopolyester has a glass transition temperature of at least 57°C which greatly reduces blocking and fusion of the fiber during winding and long term storage. The sulfopolyester may be removed by contacting the multicomponent fiber with water to leave behind the water non-dispersible segments as microdenier fibers. A process for microdenier fibers described herein comprises:
(A) spinning a water dispersible sulfopolyester having a glass transition temperature (Tg) of at least 57°C and one or more water non-dispersible polymers immiscible with the sulfopolyester into multicomponent fibers, the sulfopolyester comprising:
   (i) 50 to 96 mole% of one or more residues of isophthalic acid or terephthalic acid, based on the total acid residues;
   (ii) 4 to 30 mole%, based on the total acid residues, of a residue of sodiosulfoisophthalic acid;
   (iii) one or more diol residues wherein at least 25 mole%, based on the total diol residues, is a poly(ethylene glycol) having a structure

      H-(OCH₂-CH₂)ₙ-OH

      wherein n is an integer in the range of 2 to 500; and
   (iv) 0 to 20 mole%, based on the total repeating units, of residues of a branching monomer having 3 or more functional groups wherein the functional groups are hydroxyl, carboxyl, or a combination thereof;
   wherein the fibers have a plurality of segments comprising the water non-dispersible polymers wherein the segments are substantially isolated from each other by the sulfopolyester intervening between the segments and the fibers contain less than 10 weight percent of a pigment or filler, based on the total weight of the fibers; and
(B) contacting the multicomponent fibers with water to remove the sulfopolyester thereby forming microdenier fibers.

The water non-dispersible polymers may be biodistintegratable as determined by DIN Standard 54900 and/or biodegradable as determined by ASTM Standard Method, D6340-98. The multicomponent fiber also may be used to prepare a fibrous article such as a yarn, fabric, melt-blown web, spunbonded web, or non-woven fabric and which may comprise one or more layers of fibers. The fibrous article having multicomponent fibers, in turn, may be contacted with water to produce fibrous articles containing microdenier fibres.

A multicomponent fibre having a sheath core configuration is defined in claim 9 and dependent claims 10 to 14.

A process for making at least one multicomponent fibre having a sheath core core configuration is defined in claim 24. Another process for a microdenier fiber web described herein, comprises:
(A) spinning a water dispersible sulfopolyester having a glass transition temperature (Tg) of at least 57°C and one or more water non-dispersible polymers immiscible with the sulfopolyester into multicomponent fibers, the sulfopolyester comprising:
   (i) 50 to 96 mole% of one or more residues of isophthalic acid or terephthalic acid, based on the total acid residues;
   (ii) 4 to 30 mole%, based on the total acid residues, of a residue of sodiosulfoisophthalic acid;
   (iii) one or more diol residues wherein at least 25 mole%, based on the total diol residues, is a poly(ethylene glycol) having a structure

      H-(OCH₂-CH₂)ₙ-OH

      wherein n is an integer in the range of 2 to 500; and
   (iv) 0 to 20 mole%, based on the total repeating units, of residues of a branching monomer having 3 or more functional groups wherein the functional groups are hydroxyl, carboxyl, or a combination thereof.
   wherein the multicomponent fibers have a plurality of segments comprising the water non-dispersible polymers and the segments are substantially isolated from each other by the sulfopolyester intervening between the segments and the fibers contain less than 10 weight percent of a pigment or filler, based on the total weight of said fibers;
(B) overlapping and collecting the multicomponent fibers of Step A to form a nonwoven web; and
(C) contacting the nonwoven web with water to remove the sulfopolyester thereby forming a microdenier fiber web.

Disclosed herein is also a process for making a water-dispersible, nonwoven fabric comprising:
(A) heating a water-dispersible polymer composition to a temperature above its flow point, wherein the polymer composition comprises
   (i) a sulfopolyester having a glass transition temperature (Tg) of at least 25°C, the sulfopolyester comprising:
      (a) residues of one or more dicarboxylic acids;
      (b) 4 to 40 mole%, based on the total repeating units, of residues of at least one sulfomonomer having 2 functional groups and one or more metal sulfonate groups attached to an aromatic or cycloaliphatic ring wherein the functional groups are hydroxyl, carboxyl, or a combination thereof;
      (c) one or more diol residues wherein at least 20 mole%, based on the total diol residues, is a poly(ethylene glycol) having a structure

         H-(OCH2-CH2)n-OH

         wherein n is an integer in the range of 2 to 500;
      (d) 0 to 25 mole%, based on the total repeating units, of residues of a branching monomer having 3 or more functional groups wherein the functional groups are hydroxyl, carboxyl, or a combination thereof;
   (ii) optionally, a water-dispersible polymer blended with the sulfopolyester; and
   (iii) optionally, a water non-dispersible polymer blended with the sulfopolyester to form a blend with the proviso that the blend is an immiscible blend;
   wherein the polymer composition contains less than 10 weight percent of a pigment or filler, based on the total weight of the polymer composition;
(B) melt spinning filaments; and
(C) overlapping and collecting the filaments of Step B to form a nonwoven web.

In another aspect of the present invention, there is provided a multicomponent fiber, having a a sheath core configuration, comprising:
a sheath component comprising
   (A) at least one water dispersible sulfopolyester of the present invention; and
   (B) a core component comprising at least one water non-dispersible polymer immiscible with the sulfopolyester,
wherein the fiber has an as-spun filament tex of less than 6.67 dtex (as spun denier of less than about 6 denier per filament).

A fibrous article comprising the fibre is defined in claim 15 and dependent claims 16 to 23.

In another aspect as described herein, there is provided a multicomponent extrudate having a shaped cross section, comprising:
(A) at least one water dispersible sulfopolyester; and
(B) a plurality of domains comprising one or more water non-dispersible polymers immiscible with the sulfopolyester, wherein the domains are substantially isolated from each other by the sulfopolyester intervening between the domains, wherein the extrudate is capable of being melt drawn at a speed of at least 2000 m/min.

In another aspect of the present invention, there is provided a process for making a multicomponent fiber having a sheath core configuration comprising spinning at least one water dispersible sulfopolyester of the present invention and one or more water non-dispersible polymers immiscible with the sulfopolyester, wherein the multicomponent fiber comprises a core component and a sheath component; wherein said core component comprises said water non-dispersible polymer; wherein said sheath component comprises said water dispersible sulfopolyester; and wherein the multicomponent fiber has an as-spun filament tex of less thant 6.67 dtex (as spun denier of less than 6 denier per filament). Another process for making a multicomponent fiber having a shaped cross section described herein comprises extruding at least one water dispersible sulfopolyester and one or more water non-dispersible polymers immiscible with the sulfopolyester to produce a multicomponent extrudate, wherein the multicomponent extrudate has a plurality of domains comprising said water non-dispersible polymers and said domains are substantially isolated from each other by said sulfopolyester intervening between said domains; and melt drawing the multicomponent extrudate at a speed of at least about 2000 m/min to produce the multicomponent fiber.

In another aspect as described herein is a process for producing microdenier fibers comprising:
(A) spinning at least one water dispersible sulfopolyester and one or more water non-dispersible polymers immiscible with the water dispersible sulfopolyester into multicomponent fibers, wherein the multicomponent fibers have a plurality of domains comprising the water non-dispersible polymers wherein the domains are substantially isolated from each other by the sulfopolyester intervening between said domains; wherein the multicomponent fiber has an as-spun filament tex of less than 6.67 dtex (as spun denier of less than 6 denier per filament); wherein said water dispersible sulfopolyester has a melt viscosity of less than 1200 Pa·s (12,000 poise) measured at 240°C at a strain rate of 1 rad/sec, and wherein the sulfopolyester comprises less than 25 mole % of residues of at least one sulfomonomer, based on the total moles of diacid or diol residues; and
(B) contacting the multicomponent fibers with water to remove said water dispersible sulfopolyester thereby forming microdenier fibers of the water non-dispersible polymer(s).

Another process for producing microdenier fibers described herein comprises:
(A) extruding at least one water dispersible sulfopolyester and one or more water non-dispersible polymers immiscible with the water dispersible sulfopolyester to produce multicomponent extrudates, wherein the multicomponent extrudates have a plurality of domains comprising the water non-dispersible polymers wherein the domains are substantially isolated from each other by the sulfopolyester intervening between the domains;
(B) melt drawing the multicomponent extrudates at a speed of at least 2000 m/min to form multicomponent fibers; and
(C) contacting the multicomponent fibers with water to remove the water dispersible sulfopolyester thereby forming microdenier fibers of the water non-dispersible polymer(s).

Yet another aspect as described herein is a process for making a microdenier fiber web comprising:
(A) spinning at least one water dispersible sulfopolyester and one or more water non-dispersible polymers immiscible with the sulfopolyester into multicomponent fibers, the multicomponent fibers have a plurality of domains comprising the water non-dispersible polymers wherein the domains are substantially isolated from each other by the water dispersible sulfopolyester intervening between the domains; wherein the multicomponent fiber has an as-spun filament tex of less than 6.67 dtex (as spun denier of less than 6 denier per filament; wherein the water dispersible sulfopolyester has a melt viscosity of less than 1200 Pa·s (12,000 poise) measured at 240°C at a strain rate of 1 rad/sec, and wherein the sulfopolyester comprising less than 25 mole % of residues of at least one sulfomonomer, based on the total moles of diacid or diol residues;
(B) collecting the multicomponent fibers of Step (A) to form a non-woven web; and
(C) contacting the non-woven web with water to remove the sulfopolyester thereby forming a microdenier fiber web.

Another process for making a microdenier fiber web described herein comprises:
(A) extruding at least one water dispersible sulfopolyester and one or more water non-dispersible polymers immiscible with the sulfopolyester to a produce multicomponent extrudate, the multicomponent extrudate have a plurality of domains comprising the water non-dispersible polymers wherein the domains are substantially isolated from each other by the sulfopolyester intervening between the domains;
(B) melt drawing the multicomponent extrudates at a speed of at least 2000 m/min to form multicomponent fibers;
(C) collecting the multicomponent fibers of Step (B) to form a non-woven web; and
(D) contacting the non-woven web with water to remove said sulfopolyester thereby forming a microdenier fiber web.

Our invention thus offers an inexpensive process for a water-dispersible nonwoven fabric by melt-spinning a water-dispersible sulfopolyester and forming a nonwoven web. The nonwoven fabric may be in the form of a flat fabric or a 3-dimensional shape and may be incorporated into a variety of fibrous articles such as the personal care articles noted hereinabove or used for the manufacture of water-dispersible and/or flushable protective outerware such as, for example, surgical gowns and protective clothing for chemical and biohazard cleanup and laboratory work.

### DETAILED DESCRIPTION

The present invention provides a water dispersible sulfopolyester and water-dispersible fibers and fibrous articles that show tensile strength, absorptivity, flexibility, and fabric integrity in the presence of moisture, especially upon exposure to human bodily fluids. The fibers and fibrous articles of our invention do not require the presence of oil, wax, or fatty acid finishes or the use of large amounts (typically 10 wt% or greater) of pigments or fillers to prevent blocking or fusing of the fibers during processing. In addition, the fibrous articles prepared from our fibers do not require a binder and readily disperse or dissolve in home or public sewerage systems.

In a general embodiment, a water-dispersible fiber is described which comprises a sulfopolyester having a glass transition temperature (Tg) of at least 25°C, wherein the sulfopolyester comprises:
(A) residues of one or more dicarboxylic acids;
(B) 4 to 40 mole%, based on the total repeating units, of residues of at least one sulfomonomer having 2 functional groups and one or more sulfonate groups attached to an aromatic or cycloaliphatic ring wherein the functional groups are hydroxyl, carboxyl, or a combination thereof;
(C) one or more diol residues wherein at least 25 mole%, based on the total diol residues, is a poly(ethylene glycol) having a structure

   H-(OCH₂-CH₂)ₙ-OH
wherein n is an integer in the range of 2 to 500; and (iv) 0 to 25 mole%, based on the total repeating units, of residues of a branching monomer having 3 or more functional groups wherein the functional groups are hydroxyl, carboxyl, or a combination thereof.

Our fiber may optionally include a water-dispersible polymer blended with the sulfopolyester and, optionally, a water non-dispersible polymer blended with the sulfopolyester with the proviso that the blend is an immiscible blend. Our fiber contains less than 10 weight percent of a pigment or filler, based on the total weight of the fiber. The present invention also includes fibrous articles comprising these fibers and may include personal care products such as wipes, gauze, tissue, diapers, adult incontinence briefs, training pants, sanitary napkins, bandages, and surgical dressings. The fibrous articles may have one or more absorbent layers of fibers.

The fibers as described herein may be unicomponent fibers, bicomponent or multicomponent fibers. For example, the fibers as described herein may be prepared by melt spinning a single sulfopolyester or sulfopolyester blend and include staple, monofilament, and multifilament fibers with a shaped cross-section. In addition, multicomponent fibers, such as described, for example, in U.S. Patent No. 5,916,678, which may be prepared by extruding the sulfopolyester and one or more water non-dispersible polymers, which are immiscible with the sulfopolyester, separately through a spinneret having a shaped or engineered transverse geometry such as, for example, an "islands-in-the-sea", sheath-core, side-by-side, or segmented pie configuration. The sulfopolyester may be later removed by dissolving the interfacial layers or pie segments and leaving the smaller filaments or microdenier fibers of the water non-dispersible polymer(s). These fibers of the water non-dispersible polymer have fiber size much smaller than the multicomponent fiber before removing the sulfopolyester. For example, the sulfopolyester and water non-dispersible polymers may be fed to a polymer distribution system where the polymers are introduced into a segmented spinneret plate. The polymers follow separate paths to the fiber spinneret and are combined at the spinneret hole which comprises either two concentric circular holes thus providing a sheath-core type fiber, or a circular spinneret hole divided along a diameter into multiple parts to provide a fiber having a side-by-side type. Alternatively, the immiscible water dispersible sulfopolyester and water non-dispersible polymers may be introduced separately into a spinneret having a plurality of radial channels to produce a multicomponent fiber having a segmented pie cross section. Typically, the sulfopolyester will form the "sheath" component of a sheath core configuration. In fiber cross sections having a plurality of segments, the water non-dispersible segments, typically, are substantially isolated from each other by the sulfopolyester. Alternatively, multicomponent fibers may be formed by melting the sulfopolyester and water non-dispersible polymers in separate extruders and directing the polymer flows into one spinneret with a plurality of distribution flow paths in form of small thin tubes or segments to provide a fiber having an islands-in-the-sea shaped cross section. An example of such a spinneret is described in U.S. Patent No. 5,366,804. In the present invention, typically, the sulfopolyester will form the "sea" component and the water non-dispersible polymer will form the "islands" component.

Unless otherwise indicated, all numbers expressing quantities of ingredients, properties such as molecular weight, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention. At the very least, each numerical parameter should at least be construed in light of the number of reported significant digits and by applying ordinary rounding techniques. Further, the ranges stated in this disclosure and the claims are intended to include the entire range specifically and not just the endpoint(s). For example, a range stated to be 0 to 10 is intended to disclose all whole numbers between 0 and 10 such as, for example 1,2,3 and 4, all fractional numbers between 0 and 10, for example 1.5, 2.3, 4.57, and 6.1113, and the endpoints 0 and 10. Also, a range associated with chemical substituent groups such as, for example, "C1 to C5 hydrocarbons", is intended to specifically include and disclose C1 and C5 hydrocarbons as well as C2, C3, and C4 hydrocarbons.

Notwithstanding that the numerical ranges and parameters setting forth the broad scope of the invention are approximations, the numerical values set forth in the specific examples are reported as precisely as possible. Any numerical value, however, inherently contain certain errors necessarily resulting from the standard deviation found in their respective testing measurements.

The unicomponent fibers and fibrous articles as described herein are water-dispersible and, typically, completely disperse at room temperature. Higher water temperatures can be used to accelerate their dispersibility or rate of removal from the nonwoven or multicomponent fiber. The term "water-dispersible", as used herein with respect to unicomponent fibers and fibrous articles prepared from unicomponent fibers, is intended to be synonymous with the terms "water-dissipatable", "water-disintegratable", "water-dissolvable", "water-dispellable", "water soluble", water-removable", "hydrosoluble", and "hydrodispersible" and is intended to mean that the fiber or fibrous article is therein or therethrough dispersed or dissolved by the action of water. The terms "dispersed", "dispersible","dissipate", or "dissipatable" mean that, using a sufficient amount of deionized water (e.g., 100:1 water:fiber by weight) to form a loose suspension or slurry of the fibers or fibrous article, at a temperature of 60°C, and within a time period of up to 5 days, the fiber or fibrous article dissolves, disintegrates, or separates into a plurality of incoherent pieces or particles distributed more or less throughout the medium such that no recognizable filaments are recoverable from the medium upon removal of the water, for example, by filtration or evaporation. Thus, "water-dispersible", as used herein, is not intended to include the simple disintegration of an assembly of entangled or bound, but otherwise water insoluble or nondispersible, fibers wherein the fiber assembly simply breaks apart in water to produce a slurry of fibers in water which could be recovered by removal of the water. In the context of this invention, all of these terms refer to the activity of water or a mixture of water and a water-miscible cosolvent on the sulfopolyesters described herein. Examples of such water-miscible cosolvents includes alcohols, ketones, glycol ethers and esters. It is intended for this terminology to include conditions where the sulfopolyester is dissolved to form a true solution as well as those where the sulfopolyester is dispersed within the aqueous medium. Often, due to the statistical nature of sulfopolyester compositions, it is possible to have a soluble fraction and a dispersed fraction when a single sulfopolyester sample is placed in an aqueous medium.

Similarly, the term "water-dispersible", as used herein in reference to the sulfopolyester as one component of a multicomponent fiber or fibrous article, also is intended to be synonymous with the terms "water-dissipatable", "water-disintegratable", "water-dissolvable", "water-dispellable", "water soluble", "water-removable", "hydrosoluble", and "hydrodispersible" and is intended to mean that the sulfopolyester component is sufficiently removed from the multicomponent fiber and is dispersed or dissolved by the action of water to enable the release and separation of the water non-dispersible fibers contained therein. The terms "dispersed", "dispersible","dissipate", or "dissipatable" mean that, using a sufficient amount of deionized water (e.g., 100:1 water:fiber by weight) to form a loose suspension or slurry of the fibers or fibrous article, at a temperature of about 60°C, and within a time period of up to 5 days, sulfopolyester component dissolves, disintegrates, or separates from the multicomponent fiber, leaving behind a plurality of microdenier fibers from the water non-dispersible segments.

The term "segment" or "domain" or "zone" when used to describe the shaped cross section of a multicomponent fiber refers to the area within the cross section comprising the water non-dispersible polymers where these domains or segments are substantially isolated from each other by the water-dispersible sulfopolyester intervening between the segments or domains. The term "substantially isolated", as used herein, is intended to mean that the segments or domains are set apart from each other to permit the segments domains to form individual fibers upon removal of the sulfopolyester. Segments or domains or zones can be of similar size and shape or varying size and shape. Again, segments or domains or zones can be arranged in any configuration. These segments or domains or zones are "substantially continuous" along the length of the multicomponent extrudate or fiber.The term "substantially continuous" means continuous along at least 10 cm length of the multicomponent fiber.

As stated within this disclosure, the shaped cross section of a multicomponent fiber can, for example, be in the form of a sheath core, islands-in-the sea, segmented pie, hollow segmented pie; off-centered segmented pie, etc..

The water-dispersible fiber of the present invention is prepared from sulfopolyesters, comprising dicarboxylic acid monomer residues, sulfomonomer residues, diol monomer residues, and repeating units. The sulfomonomer may be a dicarboxylic acid, a diol, or hydroxycarboxylic acid. Thus, the term "monomer residue", as used herein, means a residue of a dicarboxylic acid, a diol, or a hydroxycarboxylic acid. A "repeating unit", as used herein, means an organic structure having 2 monomer residues bonded through a carbonyloxy group. The sulfopolyesters of the present invention contain substantially equal molar proportions of acid residues (100 mole %) and diol residues (100 mole %) which react in substantially equal proportions such that the total moles of repeating units is equal to 100 mole %. The mole percentages provided in the present disclosure, therefore, may be based on the total moles of acid residues, the total moles of diol residues, or the total moles of repeating units. For example, a sulfopolyester containing 30 mole% of a sulfomonomer, which may be a dicarboxylic acid, a diol, or hydroxycarboxylic acid, based on the total repeating units, means that the sulfopolyester contains 30 mole% sulfomonomer out of a total of 100 mole% repeating units. Thus, there are 30 moles of sulfomonomer residues among every 100 moles of repeating units. Similarly, a sulfopolyester containing 30 mole% of a dicarboxylic acid sulfomonomer, based on the total acid residues, means the sulfopolyester contains 30 mole% sulfomonomer out of a total of 100 mole% acid residues. Thus, in this latter case, there are 30 moles of sulfomonomer residues among every 100 moles of acid residues.

The sulfopolyesters described herein have an inherent viscosity, abbreviated hereinafter as "Ih.V.", of at least 0.1 dL/g, preferably about 0.2 to 0.3 dL/g, and most preferably greater than 0.3 dL/g, measured in a 60/40 parts by weight solution of phenol/tetrachloroethane solvent at 25°C and at a concentration of 0.5 g of sulfopolyester in 100 mL of solvent. The term "polyester", as used herein, encompasses both "homopolyesters" and "copolyesters" and means a synthetic polymer prepared by the polycondensation of difunctional carboxylic acids with difunctional hydroxyl compound. As used herein, the term "sulfopolyester" means any polyester comprising a sulfomonomer. Typically the difunctional carboxylic acid is a dicarboxylic acid and the difunctional hydroxyl compound is a dihydric alcohol such as, for example glycols and diols. Alternatively, the difunctional carboxylic acid may be a hydroxy carboxylic acid such as, for example, p-hydroxybenzoic acid, and the difunctional hydroxyl compound may be a aromatic nucleus bearing 2 hydroxy substituents such as, for example, hydroquinone. The term "residue", as used herein, means any organic structure incorporated into the polymer through a polycondensation reaction involving the corresponding monomer. Thus, the dicarboxylic acid residue may be derived from a dicarboxylic acid monomer or its associated acid halides, esters, salts, anhydrides, or mixtures thereof. As used herein, therefore, the term dicarboxylic acid is intended to include dicarboxylic acids and any derivative of a dicarboxylic acid, including its associated acid halides, esters, half-esters, salts, half-salts, anhydrides, mixed anhydrides, or mixtures thereof, useful in a polycondensation process with a diol to make a high molecular weight polyester.

The sulfopolyester of the present invention includes one or more dicarboxylic acid residues. Depending on the type and concentration of the sulfomonomer, the dicarboxylic acid residue may comprise from 60 to 100 mole% of the acid residues. Other examples of concentration ranges of dicarboxylic acid residues are from 60 mole% to 95 mole%, and 70 mole% to 95 mole%. Examples of dicarboxylic acids that may be used include aliphatic dicarboxylic acids, alicyclic dicarboxylic acids, aromatic dicarboxylic acids, or mixtures of two or more of these acids. Thus, suitable dicarboxylic acids include succinic; glutaric; adipic; azelaic; sebacic; fumaric; maleic; itaconic; 1,3-cyclohexanedicarboxylic; 1,4-cyclohexanedicarboxylic; diglycolic; 2,5-norbornanedicarboxylic; phthalic; terephthalic; 1,4-naphthalenedicarboxylic; 2,5-naphthalenedicarboxylic; diphenic; 4,4'-oxydibenzoic; 4,4'-sulfonyidibenzoic; and isophthalic. The preferred dicarboxylic acid residues are isophthalic, terephthalic, and 1,4-cyclohexanedicarboxylic acids, or if diesters are used, dimethyl terephthalate, dimethyl isophthalate, and dimethyl-1,4-cyclohexanedicarboxylate with the residues of isophthalic and terephthalic acid being especially preferred. Although the dicarboxylic acid methyl ester is the most preferred embodiment, it is also acceptable to include higher order alkyl esters, such as ethyl, propyl, isopropyl, butyl, and so forth. In addition, aromatic esters, particularly phenyl, also may be employed.

The sulfopolyester preferably includes 5 to 20 mole%, based on the total repeating units, of residues of at least one sulfomonomer having 2 functional groups and one or more sulfonate groups attached to an aromatic or cycloaliphatic ring wherein the functional groups are hydroxyl, carboxyl, or a combination thereof. An additional example of a concentration range for the sulfomonomer residues is 8 to 25 mole%, based on the total repeating units. The sulfomonomer may be a dicarboxylic acid or ester thereof containing a sulfonate group, a diol containing a sulfonate group, or a hydroxy acid containing a sulfonate group. The term "sulfonate" refers to a salt of a sulfonic acid having the structure "-SO₃M" wherein M is the cation of the sulfonate salt. The cation of the sulfonate salt may be a metal ion such as Li⁺, Na⁺, K⁺, Mg⁺⁺, Ca⁺⁺, Ni⁺⁺ and Fe⁺⁺. Alternatively, the cation of the sulfonate salt may be non-metallic such as a nitrogenous base as described, for example, in U.S. Patent No. 4,304,901. Nitrogen-based cations are derived from nitrogen-containing bases, which may be aliphatic, cycloaliphatic, or aromatic compounds. Examples of such nitrogen containing bases include ammonia, dimethylethanolamine, diethanolamine, triethanolamine, pyridine, morpholine, and piperidine. Because monomers containing the nitrogen-based sulfonate salts typically are not thermally stable at conditions required to make the polymers in the melt, the method of this invention for preparing sulfopolyesters containing nitrogen-based sulfonate salt groups is to disperse, dissipate, or dissolve the polymer containing the required amount of sulfonate group in the form of its alkali metal salt in water and then exchange the alkali metal cation for a nitrogen-based cation.

When a monovalent alkali metal ion is used as the cation of the sulfonate salt, the resulting sulfopolyester is completely dispersible in water with the rate of dispersion dependent on the content of sulfomonomer in the polymer, temperature of the water, surface area/thickness of the sulfopolyester, and so forth. When a divalent metal ion is used, the resulting sulfopolyesters are not readily dispersed by cold water but are more easily dispersed by hot water. Utilization of more than one counterion within a single polymer composition is possible and may offer a means to tailor or fine-tune the water-responsivity of the resulting article of manufacture. Examples of sulfomonomers residues include monomer residues where the sulfonate salt group is attached to an aromatic acid nucleus, such as, for example, benzene; naphthalene; diphenyl; oxydiphenyl; sulfonyldiphenyl; and methylenediphenyl or cycloaliphatic rings, such as, for example, cyclohexyl; cyclopentyl; cyclobutyl; cycloheptyl; and cyclooctyl. Other examples of sulfomonomer residues which may be used in the present invention are the metal sulfonate salt of sulfophthalic acid, sulfoterephthalic acid, sulfoisophthalic acid, or combinations thereof. Other examples of sulfomonomers which may be used are 5-sodiosulfoisophthalic acid and esters thereof. If the sulfomonomer residue is from 5-sodiosulfoisophthalic acid, typical sulfomonomer concentration ranges are 4 to 35 mole%, 8 to 30 mole %, and 8 to 25 mole %, based on the total moles of acid residues.

The sulfomonomers used in the preparation of the sulfopolyesters are known compounds and may be prepared using methods well known in the art. For example, sulfomonomers in which the sulfonate group is attached to an aromatic ring may be prepared by sulfonating the aromatic compound with oleum to obtain the corresponding sulfonic acid and followed by reaction with a metal oxide or base, for example, sodium acetate, to prepare the sulfonate salt. Procedures for preparation of various sulfomonomers are described, for example, in U.S. Patent No.'s 3,779,993; 3,018,272; and 3,528,947.

It is also possible to prepare the polyester using, for example, a sodium sulfonate salt, and ion-exchange methods to replace the sodium with a different ion, such as zinc, when the polymer is in the dispersed form. This type of ion exchange procedure is generally superior to preparing the polymer with divalent salts insofar as the sodium salts are usually more soluble in the polymer reactant melt-phase.

The sulfopolyester includes one or more diol residues which may include aliphatic, cycloaliphatic, and aralkyl glycols. The cycloaliphatic diols, for example, 1,3- and 1,4-cyclohexanedimethanol, may be present as their pure *cis* or *trans* isomers or as a mixture of *cis* and *trans* isomers. As used herein, the term "diol" is synonymous with the term "glycol" and means any dihydric alcohol. Examples of diols include ethylene glycol; diethylene glycol; triethylene glycol; polyethylene glycols; 1,3-propanediol; 2,4-dimethyl-2-ethylhexane-1,3-diol; 2,2-dimethyl-1,3-propanediol; 2-ethyl-2-butyl-1,3-propanediol; 2-ethyl-2-isobutyl-1,3-propanediol; 1,3-butanediol; 1,4-butanediol; 1,5-pentanediol; 1,6-hexanediol; 2,2,4-trimethyl-1,6-hexanediol; thiodiethanol; 1,2-cyclohexanedimethanol; 1,3-cyclohexanedimethanol; 1,4-cyclohexanedimethanol; 2,2,4,4-tetramethyl-1,3-cyclobutanediol; p-xylylenediol, or combinations of one or more of these glycols.

The diol residues may include from 25 mole% to 100 mole%, based on the total diol residues, of residue of a poly(ethylene glycol) having a structure

H-(OCH₂-CH₂)ₙ-OH

wherein n is an integer in the range of 2 to 500. Examples of lower molecular weight polyethylene glycols, e.g., wherein n is from 2 to 6, are diethylene glycol, triethylene glycol, and tetraethylene glycol. Of these lower molecular weight glycols, diethylene and triethylene glycol are most preferred. Higher molecular weight polyethylene glycols (abbreviated herein as "PEG"), wherein n is from 7 to 500, include the commercially available products known under the designation CARBOWAX®, a product of Dow Chemical Company (formerly Union Carbide). Typically, PEGs are used in combination with other diols such as, for example, diethylene glycol or ethylene glycol. Based on the values of n, which range from greater than 6 to 500, the molecular weight may range from greater than 300 to 22,000 g/mol. The molecular weight and the mole% are inversely proportional to each other; specifically, as the molecular weight is increased, the mole % will be decreased in order to achieve a designated degree of hydrophilicity. For example, it is illustrative of this concept to consider that a PEG having a molecular weight of 1000 may constitute up to 10 mole% of the total diol, while a PEG having a molecular weight of 10,000 would typically be incorporated at a level of less than 1 mole% of the total diol.

Certain dimer, trimer, and tetramer diols may be formed *in situ* due to side reactions that may be controlled by varying the process conditions. For example, varying amounts of diethylene, triethylene, and tetraethylene glycols may be formed from ethylene glycol from an acid-catalyzed dehydration reaction which occurs readily when the polycondensation reaction is carried out under acidic conditions. The presence of buffer solutions, well-known to those skilled in the art, may be added to the reaction mixture to retard these side reactions. Additional compositional latitude is possible, however, if the buffer is omitted and the dimerization, trimerization, and tetramerization reactions are allowed to proceed.

The sulfopolyester of the present invention may include from 0 to 25 mole%, based on the total repeating units, of residues of a branching monomer having 3 or more functional groups wherein the functional groups are hydroxyl, carboxyl, or a combination thereof. Examples of branching monomers are 1,1,1-trimethylol propane, 1,1,1-trimethylolethane, glycerin, pentaerythritol, erythritol, threitol, dipentaerythritol, sorbitol, trimellitic anhydride, pyromellitic dianhydride, dimethylol propionic acid, or combinations thereof. Further examples of branching monomer concentration ranges are from 0 to about 20 mole% and from 0 to about 10 mole%. The presence of a branching monomer may result in a number of possible benefits to the sulfopolyester of the present invention, including the ability to tailor rheological, solubility, and tensile properties. For example, at a constant molecular weight, a branched sulfopolyester, compared to a linear analog, will also have a greater concentration of end groups that may facilitate post-polymerization crosslinking reactions. At high concentrations of branching agent, however, the sulfopolyester may be prone to gelation.

The sulfopolyester used for the fiber of the present invention has a glass transition temperature, abbreviated herein as "Tg", of at least 40°C as measured on the dry polymer using standard techniques, such as differential scanning calorimetry ("DSC"), well known to persons skilled in the art. The Tg measurements of the sulfopolyesters of the present invention are conducted using a "dry polymer", that is, a polymer sample in which adventitious or absorbed water is driven off by heating to polymer to a temperature of about 200°C and allowing the sample to return to room temperature. Typically, the sulfopolyester is dried in the DSC apparatus by conducting a first thermal scan in which the sample is heated to a temperature above the water vaporization temperature, holding the sample at that temperature until the vaporization of the water absorbed in the polymer is complete (as indicated by an a large, broad endotherm), cooling the sample to room temperature, and then conducting a second thermal scan to obtain the Tg measurement. Further examples of glass transition temperatures of the sulfopolyester are at least 50°C, at least 60°C, at least 65°C, at least 80°C, and at least 90°C. Although other Tg's are possible, typical glass transition temperatures of the dry sulfopolyesters our invention are, about 48°C, about 55°C, about 65°C, about 70°C, about 75°C, about 85°C, and about 90°C.

Our fibers may consist essentially of or, consist of, the sulfopolyesters described hereinabove. In another embodiment, however, the sulfopolyesters of this invention may be a single polyester or may be blended with one or more supplemental polymers to modify the properties of the resulting fiber. The supplemental polymer may or may not be water-dispersible depending on the application and may be miscible or immiscible with the sulfopolyester. If the supplemental polymer is water non-dispersible, it is preferred that the blend with the sulfopolyester is immiscible. The term "miscible", as used herein, is intended to mean that the blend has a single, homogeneous amorphous phase as indicated by a single composition-dependent Tg. For example, a first polymer that is miscible with second polymer may be used to "plasticize" the second polymer as illustrated, for example, in U.S. Patent No. 6,211,309. By contrast, the term "immiscible", as used herein, denotes a blend that shows at least 2, randomly mixed, phases and has more than one Tg. Some polymers may be immiscible and yet compatible with the sulfopolyester. A further general description of miscible and immiscible polymer blends and the various analytical techniques for their characterization may be found in Polymer Blends Volumes 1 and 2, Edited by D.R. Paul and C.B. Bucknall, 2000, John Wiley & Sons, Inc.

Examples of water-dispersible polymers that may be blended with the sulfopolyester are polymethacrylic acid, polyvinyl pyrrolidone, polyethylene-acrylic acid copolymers, polyvinyl methyl ether, polyvinyl alcohol, polyethylene oxide, hydroxy propyl cellulose, hydroxypropyl methyl cellulose, methyl cellulose, ethyl hydroxyethyl cellulose, isopropyl cellulose, methyl ether starch, polyacrylamides, poly(N-vinyl caprolactam), polyethyl oxazoline, poly(2-isopropyl-2-oxazoline), polyvinyl methyl oxazolidone, water-dispersible sulfopolyesters, polyvinyl methyl oxazolidimone, poly(2,4-dimethyl-6-triazinylethylene), and ethylene oxide-propylene oxide copolymers. Examples of polymers which are water non-dispersible that may be blended with the sulfopolyester include polyolefins, such as homo- and copolymers of polyethylene and polypropylene; poly(ethylene terephthalate); poly(butylene terephthalate); and polyamides, such as nylon-6; polylactides; caprolactone; Eastar Bio® (poly(tetramethylene adipate-co-terephthalate), a product of Eastman Chemical Company); polycarbonate; polyurethane; and polyvinyl chloride.

According to our invention, blends of more than one sulfopolyester may be used to tailor the end-use properties of the resulting fiber or fibrous article, for example, a nonwoven fabric or web. The blends of one or more sulfopolyesters will have Tg's of at least 40°C for the water-dispersible, unicomponent fibers and at least 57°C for the multicomponent fibers. Thus, blending may also be exploited to alter the processing characteristics of a sulfopolyester to facilitate the fabrication of a nonwoven. In another example, an immiscible blend of polypropylene and sulfopolyester may provide a conventional nonwoven web that will break apart and completely disperse in water as true solubility is not needed. In this latter example, the desired performance is related to maintaining the physical properties of the polypropylene while the sulfopolyester is only a spectator during the actual use of the product or, alternatively, the sulfopolyester is fugitive and is removed before the final form of the product is utilized.

The sulfopolyester and supplemental polymer may be blended in batch, semicontinuous, or continuous processes. Small scale batches may be readily prepared in any high-intensity mixing devices well-known to those skilled in the art, such as Banbury mixers, prior to melt-spinning fibers. The components may also be blended in solution in an appropriate solvent. The melt blending method includes blending the sulfopolyester and supplemental polymer at a temperature sufficient to melt the polymers. The blend may be cooled and pelletized for further use or the melt blend can be melt spun directly from this molten blend into fiber form. The term "melt" as used herein includesmerely softening the polyester. For melt mixing methods generally known in the polymers art, see Mixing and Compounding of Polymers (I. Manas-Zloczower & Z. Tadmor editors, Carl Hanser Verlag Publisher, 1994, New York, N. Y.).

As described herein is a water-dispersible fiber comprising a sulfopolyester having a glass transition temperature (Tg) of at least 25°C, wherein the sulfopolyester comprises:
(A) 50 to 96 mole% of one or more residues of isophthalic acid or terephthalic acid, based on the total acid residues;
(B) 4 to 30 mole%, based on the total acid residues, of a residue of sodiosulfoisophthalic acid;
(C) one or more diol residues wherein at least 25 mole%, based on the total diol residues, is a poly(ethylene glycol) having a structure

   H-(OCH₂-CH₂)ₙ-OH

   wherein n is an integer in the range of 2 to about 500; (iv) 0 to about 20 mole%, based on the total repeating units, of residues of a branching monomer having 3 or more functional groups wherein the functional groups are hydroxyl, carboxyl, or a combination thereof. As described hereinabove, the fiber may optionally include a first water-dispersible polymer blended with the sulfopolyester; and, optionally, a water non-dispersible polymer blended with the sulfopolyester such that the blend is an immiscible blend. Our fiber contains less than 10 weight percent of a pigment or filler, based on the total weight of the fiber. The first water-dispersible polymer is as described hereinabove. The sulfopolyester of the invention has a glass transition temperature (Tg) of at least 40°C, but may have, for example, a Tg of about 48°C, about 55°C, about 65°C, about 70°C, about 75°C, about 85°C, and about 90°C. The sulfopolyester may contain other concentrations of isophthalic acid residues, for example, 60 to 95 mole%, and 75 to 95 mole%. Further examples of isophthalic acid residue concentrations ranges are 70 to 85 mole%, 85 to 95 mole% and 90 to 95 mole%. The sulfopolyester also may comprise 25 to 95 mole% of the residues of diethylene glycol. Further examples of diethylene glycol residue concentration ranges include 50 to 95 mole%, 70 to 95 mole%, and 75 to 95 mole%. The sulfopolyester also may include the residues of ethylene glycol and/or 1,4-cyclohexanedimethanol, abbreviated herein as "CHDM". Typical concentration ranges of CHDM residues are 10 to 75 mole%, 25 to 65 mole%, and 40 to 60 mole%. Typical concentration ranges of ethylene glycol residues are 10 to 75 mole%, 25 to 65 mole%, and 40 to 60 mole%. In another embodiment, the sulfopolyester comprises 75 to 96 mole% of the residues of isophthalic acid and 25 to 95 mole% of the residues of diethylene glycol.

The sulfopolyesters of the instant invention are readily prepared from the appropriate dicarboxylic acids, esters, anhydrides, or salts, sulfomonomer, and the appropriate diol or diol mixtures using typical polycondensation reaction conditions. They may be made by continuous, semi-continuous, and batch modes of operation and may utilize a variety of reactor types. Examples of suitable reactor types include stirred tank, continuous stirred tank, slurry, tubular, wiped-film, falling film, or extrusion reactors. The term "continuous" as used herein means a process wherein reactants are introduced and products withdrawn simultaneously in an uninterrupted manner. By "continuous" it is meant that the process is substantially or completely continuous in operation and is to be contrasted with a "batch" process. "Continuous" is not meant in any way to prohibit normal interruptions in the continuity of the process due to, for example, start-up, reactor maintenance, or scheduled shut down periods. The term "batch" process as used herein means a process wherein all the reactants are added to the reactor and then processed according to a predetermined course of reaction during which no material is fed or removed into the reactor. The term "semicontinuous" means a process where some of the reactants are charged at the beginning of the process and the remaining reactants are fed continuously as the reaction progresses. Alternatively, a semicontinuous process may also include a process similar to a batch process in which all the reactants are added at the beginning of the process except that one or more of the products are removed continuously as the reaction progresses. The process is operated advantageously as a continuous process for economic reasons and to produce superior coloration of the polymer as the sulfopolyester may deteriorate in appearance if allowed to reside in a reactor at an elevated temperature for too long a duration.

The sulfopolyesters of the present invention are prepared by procedures known to persons skilled in the art. The sulfomonomer is most often added directly to the reaction mixture from which the polymer is made, although other processes are known and may also be employed, for example, as described in U. S. Patent No.'s 3,018,272, 3,075,952, and 3,033,822. The reaction of the sulfomonomer, diol component and the dicarboxylic acid component may be carried out using conventional polyester polymerization conditions. For example, when preparing the sulfopolyesters by means of an ester interchange reaction, i.e., from the ester form of the dicarboxylic acid components, the reaction process may comprise two steps. In the first step, the diol component and the dicarboxylic acid component, such as, for example, dimethyl isophthalate, are reacted at elevated temperatures, typically, 150°C to 250°C for 0.5 to 8 hours at pressures ranging from 0.0 kPa gauge to 414 kPa gauge (60 pounds per square inch, "psig"). Preferably, the temperature for the ester interchange reaction ranges from 180°C to 230°C for 1 to 4 hours while the preferred pressure ranges from 103 kPa gauge (15 psig) to 276 kPa gauge (40 psig). Thereafter, the reaction product is heated under higher temperatures and under reduced pressure to form sulfopolyester with the elimination of diol, which is readily volatilized under these conditions and removed from the system. This second step, or polycondensation step, is continued under higher vacuum and a temperature which generally ranges from 230°C to 350°C, preferably 250°C to 310°C and most preferably 260°C to 290°C for 0.1 to 6 hours, or preferably, for 0.2 to 2 hours, until a polymer having the desired degree of polymerization, as determined by inherent viscosity, is obtained. The polycondensation step may be conducted under reduced pressure which ranges from 53 kPa (400 torr) to 0.013 kPa (0.1 torr). Stirring or appropriate conditions are used in both stages to ensure adequate heat transfer and surface renewal of the reaction mixture. The reactions of both stages are facilitated by appropriate catalysts such as, for example, alkoxy titanium compounds, alkali metal hydroxides and alcoholates, salts of organic carboxylic acids, alkyl tin compounds, metal and oxides. A three-stage manufacturing procedure, similar to that described in U.S. Patent No. 5,290,631, may also be used, particularly when a mixed monomer feed of acids and esters is employed.

To ensure that the reaction of the diol component and dicarboxylic acid component by an ester interchange reaction mechanism is driven to completion, it is preferred to employ about 1.05 to about 2.5 moles of diol component to one mole dicarboxylic acid component. Persons of skill in the art will understand, however, that the ratio of diol component to dicarboxylic acid component is generally determined by the design of the reactor in which the reaction process occurs.

In the preparation of sulfopolyester by direct esterification, i.e., from the acid form of the dicarboxylic acid component, sulfopolyesters are produced by reacting the dicarboxylic acid or a mixture of dicarboxylic acids with the diol component or a mixture of diol components. The reaction is conducted at a pressure of from 7 kPa gauge (1 psig) to 1379 kPa gauge (200 psig), preferably less than 689 kPa (100 psig) to produce a low molecular weight, linear or branched sulfopolyester product having an average degree of polymerization of from 1.4 to 10. The temperatures employed during the direct esterification reaction typically range from 180°C to 280°C, more preferably ranging from 220°C to 270°C. This low molecular weight polymer may then be polymerized by a polycondensation reaction.

The water dispersible and multicomponent fibers and fibrous articles of this invention also may contain other conventional additives and ingredients which do not deleteriously affect their end use. For example, additives such as fillers, surface friction modifiers, light and heat stabilizers, extrusion aids, antistatic agents, colorants, dyes, pigments, fluorescent brighteners, antimicrobials, anticounterfeiting markers, hydrophobic and hydrophilic enhancers, viscosity modifiers, slip agents, toughenersand adhesion promoters may be used.

The fibers and fibrous articles of our invention do not require the presence of additives such as, for example, pigments, fillers, oils, waxes, or fatty acid finishes, to prevent blocking or fusing of the fibers during processing. The terms "blocking or fusing", as used herein, is understood to mean that the fibers or fibrous articles stick together or fuse into a mass such that the fiber cannot be processed or used for its intended purpose. Blocking and fusing can occur during processing of the fiber or fibrous article or during storage over a period of days or weeks and is exacerbated under hot, humid conditions.

In one embodiment of the invention, the fibers and fibrous articles will contain less than 10 wt% of such anti-blocking additives, based on the total weight of the fiber or fibrous article. For example, the fibers and fibrous articles may contain less than 10 wt% of a pigment or filler. In other examples, the fibers and fibrous articles may contain less than 9 wt%, less than 5 wt%, less than 3 wt%, less than 1 wt%, and 0 wt% of a pigment or filler, based on the total weight of the fiber. Colorants, sometimes referred to as toners, may be added to impart a desired neutral hue and/or brightness to the sulfopolyester. When colored fibers are desired, pigments or colorants may be included in the sulfopolyester reaction mixture during the reaction of the diol monomer and the dicarboxylic acid monomer or they may be melt blended with the preformed sulfopolyester. A preferred method of including colorants is to use a colorant having thermally stable organic colored compounds having reactive groups such that the colorant is copolymerized and incorporated into the sulfopolyester to improve its hue. For example, colorants such as dyes possessing reactive hydroxyl and/or carboxyl groups, including blue and red substituted anthraquinones, may be copolymerized into the polymer chain.
When dyes are employed as colorants, they may be added to the copolyester reaction process after an ester interchange or direct esterification reaction.

For the purposes of this invention, the term "fiber" refers to a polymeric body of high aspect ratio capable of being formed into two or three dimensional articles such as woven or nonwoven fabrics. In the context of the present invention, the term "fiber" is synonymous with "fibers" and intended to mean one or more fibers. The fibers of our invention may be unicomponent fibers, bicomponent, or multicomponent fibers. The term "unicomponent fiber", as used herein, is intended to mean a fiber prepared by melt spinning a single sulfopolyester, blends of one or more sulfopolyesters, or blends of one or more sulfopolyesters with one or more additional polymers and includes staple, monofilament, and multifilament fibers. "Unicomponent" is intended to be synonymous with the term "monocomponent" and includes "biconstituent" or "multiconstituent" fibers, and refers to fibers which have been formed from at least two polymers extruded from the same extruder as a blend. Unicomponent or biconstituent fibers do not have the various polymer components arranged in relatively constantly positioned distinct zones across the cross-sectional area of the fiber and the various polymers are usually not continuous along the entire length of the fiber, instead usually forming fibrils or protofibrils which start and end at random. Thus, the term "unicomponent" is not intended to exclude fibers formed from a polymer or blends of one or more polymers to which small amounts of additives may be added for coloration, anti-static properties, lubrication, and hydrophilicity. By contrast, the term "multicomponent fiber", as used herein, intended to mean a fiber prepared by melting the two or more fiber forming polymers in separate extruders and by directing the resulting multiple polymer flows into one spinneret with a plurality of distribution flow paths but spun together to form one fiber. Multicomponent fibers are also sometimes referred to as conjugate or bicomponent fibers. The polymers are arranged in substantially constantly positioned distinct segments or zones across the cross-section of the conjugate fibers and extend continuously along the length of the conjugate fibers. The configuration of such a multicomponent fiber may be, for example, a sheath/core arrangement wherein one polymer is surrounded by another or may be a side by side arrangement, a pie arrangement or an "islands-in-the-sea" arrangement. For example, a multicomponent fiber may be prepared by extruding the sulfopolyester and one or more water non-dispersible polymers separately through a spinneret having a shaped or engineered transverse geometry such as, for example, an "islands-in-the-sea" or segmented pie configuration. Unicomponent fibers, typically, are staple, monofilament or multifilament fibers that have a shaped or round cross-section. Most fiber forms are heatset. The fiber may include the various antioxidants, pigments, and additives as described herein.

Monofilament fibers generally range in size from 16.65 dtex to 8880 dtex (15 to 8000 denier) per filament (abbreviated herein as "d/f')). Our 1 fibers typically will have values in the range of 44.4 dtex to 5550 dtex per filament (d/f values of 40 to 5000). Monofilaments may be in the form of unicomponent or multicomponent fibers. The multifilament fibers as described herein will preferably range in size from 1.5 micrometers for melt blown webs, 0.55 dtex to 55.55 dtex per filament (0.5 to 50 d/f ) for staple fibers, and up to 5550 dtex per filament (5000 d/f) for monofilament fibers. Multifilament fibers may also be used as crimped or uncrimped yarns and tows. Fibers used in melt blown web and melt spun fabrics may be produced in microdenier sizes. The term "microdenier", as used herein, is intended to mean 1.11 dtex or less per filament (a d/f value of 1 d/f or less). For example, the microdenier fibers of the instant invention typically have (d/f) values of 1.11 dtex or less, 0.55 dtex or less, 0.11 dtex or less per filament (1 or less, 0.5 or less, or 0.1 or less). Nanofibers can also be produced by electrostatic spinning.

As noted hereinabove, the sulfopolyesters also are advantageous for the preparation of bicomponent and multicomponent fibers having a shaped cross section. We have discovered that sulfopolyesters or blends of sulfopolyesters having a glass transition temperature (Tg) of at least 57°C are particularly useful for multicomponent fibers to prevent blocking and fusing of the fiber during spinning and take up. Thus, described herein is a multicomponent fiber having shaped cross section, comprising:
(A) a water dispersible sulfopolyester having a glass transition temperature (Tg) of at least 57°C, the sulfopolyester comprising:
   (i) residues of one or more dicarboxylic acids;
   (ii) 4 to 40 mole%, based on the total repeating units, of residues of at least one sulfomonomer having 2 functional groups and one or more sulfonate groups attached to an aromatic or cycloaliphatic ring wherein the functional groups are hydroxyl, carboxyl, or a combination thereof;
   (iii) one or more diol residues wherein at least 25 mole%, based on the total diol residues, is a poly(ethylene glycol) having a structure

      H-(OCH₂-CH₂)ₙ-OH

      wherein n is an integer in the range of 2 to 500; and
   (iv) 0 to 25 mole%, based on the total repeating units, of residues of a branching monomer having 3 or more functional groups wherein the functional groups are hydroxyl, carboxyl, or a combination thereof; and
(B) a plurality of segments comprising one or more water non-dispersible polymers immiscible with the sulfopolyester, wherein the segments are substantially isolated from each other by the sulfopolyester intervening between the segments;
   wherein the fiber has an islands-in-the-sea or segmented pie cross section and contains less than 10 weight percent of a pigment or filler, based on the total weight of the fiber.

The dicarboxylic acids, diols, sulfopolyester, sulfomonomers, and branching monomers residues are as described previously for other embodiments of the invention. For multicomponent fibers, it is advantageous that the sulfopolyester have a Tg of at least 57°C. Further examples of glass transition temperatures of the sulfopolyester or sulfopolyester blend of our multicomponent fiber are at least 60°C, at least 65°C, at least 70°C, at least 75°C, at least 80°C, at least 85°C, and at least 90°C. Further, to obtain a sulfopolyester with a Tg of at least 57°C, blends of one or more sulfopolyesters may be used in varying proportions to obtain a sulfopolyester blend having the desired Tg. The Tg of a sulfopolyester blend may be calculated by using a weighted average of the Tg's of the sulfopolyester components. For example, sulfopolyester having a Tg of 48°C may be blended in a 25:75 wt:wt ratio with another sulfopolyester having Tg of 65°C to give a sulfopolyester blend having a Tg of approximately 61°C.

In another embodiment of the invention, the water dispersible sulfopolyester component of the multicomponent fiber presents properties which allow at least one of the following:
(A) the multicomponent fibers to be spun to a desired low denier,
(B) the sulfopolyester in these mulficomponent fibers is resistant to removal during hydroentangling of a web formed from the fibers but is efficiently removed at elevated temperatures after hydroentanglement, and
(C) the multicomponent fibers are heat settable to yield a stable, strong fabric. Surprising and unexpected results were achieved in furtherance of these objectives using a sulfopolyester having a certain melt viscosity and level of sulfomonomer residues.

Therefore, in this embodiment described herein, a multicomponent fiber is provided having a shaped cross section comprising:
(A) at least one water dispersible sulfopolyester; and
(B) a plurality of domains comprising one or more water non-dispersible polymers immiscible with the sulfopolyester, wherein said domains are substantially isolated from each other by the sulfopolyester intervening between the domains,
   wherein the fiber has an as spun filament tex of less than 6.67 dtex (as-spun denier of less than about 6 denier per filament);
   wherein the water dispersible sulfopolyesters has a melt viscosity of less than 1200 Pa·s (12,000 poise) measured at 240°C at a strain rate of 1 rad/sec, and wherein the sulfopolyester comprises less than 25 mole % of residues of at least one sulfomonomer, based on the total moles of diacid or diol residues.

The sulfopolyester utilized in these multicomponent fibers has a melt viscosity of generally less than 1200 Pa·s (12,000 poise). Preferably, the melt viscosity of the sulfopolyester is less than 1000 Pa·s (10,000 poise), more preferably, less than 600 Pa·s (6,000), and most preferably, less than 400 Pa·s (4,000 poise) measured at 240°C and 1 rad/sec shear rate. In another aspect, the sulfopolyester has a melt viscosity of between 100-1200 Pa·s (1000-12000 poise), more preferably between 200-600 Pa·s (2000-6000 poise), and most preferably between 250-400 Pa·s (2500-4000 poise) measured at 240°C and 1 rad/sec shear rate. Prior to determining the viscosity, the samples are dried at 60°C in a vacuum oven for 2 days. The melt viscosity is measured on rheometer using a 25 mm diameter parallel-plate geometry at 1mm gap setting. A dynamic frequency sweep is run at a strain rate range of 1 to 400 rad/sec and 10% strain amplitude. The viscosity is then measured at 240° C and strain rate of 1 rad/sec.

The level of sulfomonomer residues in the sulfopolyester polymers for use in accordance with this aspect of the present invention is less than 25 mole %, and preferably, less than 20 mole %, reported as a percentage of the total diacid or diol residues in the sulfopolyester. More preferably, this level is between 4 to 20 mole %, even more preferably between 5 to 12 mole %, and most preferably between 7 to 10 mole %. Sulfomonomers for use with the invention preferably have 2 functional groups and one or more sulfonate groups attached to an aromatic or cycloaliphatic ring wherein the functional groups are hydroxyl, carboxyl, or a combination thereof. A sodiosulfo-isophthalic acid monomer is particularly preferred.

In addition to the sulfomonomer described previously, the sulfopolyester preferably comprises residues of one or more dicarboxylic acids, one or more diol residues wherein at least 25 mole %, based on the total diol residues, is a poly(ethylene glycol) having a structure

H-(OCH₂-CH₂)ₙ-OH

wherein n is an integer in the range of 2 to 500, and 0 to 20 mole %, based on the total repeating units, of residues of a branching monomer having 3 or more functional groups wherein the functional groups are hydroxyl, carboxyl, or a combination thereof.

In a particularly preferred embodiment, the sulfopolyester comprises from 80-96 mole % dicarboxylic acid residues, from 4 to 20 mole % sulfomonomer residues, and 100 mole % diol residues (there being a total mole % of 200%, i.e., 100 mole % diacid and 100 mole % diol). More specifically, the dicarboxylic portion of the sulfopolyester comprises between 60-80 mole % terephthalic acid, 0-30 mole % isophthalic acid, and 4-20 mole % 5-sodiosulfoisophthalic acid (5-SSIPA). The diol portion comprises from 0-50 mole % diethylene glycol and from 50-100 mole % ethylene glycol. An exemplary formulation according to this embodiment of the invention is set forth subsequently.

| | Approximate Mole % (based on total moles of diol or diacid residues) |
|---|---|
| Terephthalic acid | 71 |
| Isophthalic acid | 20 |
| 5-SSIPA | 9 |
| Diethylene glycol | 35 |
| Ethylene glycol | 65 |

The water non-dispersible component of the multicomponent fiber may comprise any of those water non-dispersible polymers described herein. Spinning of the fiber may also occur according to any method described herein. However, the improved rheological properties of multicomponent fibers in accordance with this aspect of the invention provide for enhanced drawings speeds. When the sulfopolyester and water non-dispersible polymer are extruded to produce multicomponent extrudates, the multicomponent extrudate is capable of being melt drawn to produce the multicomponent fiber, using any of the methods disclosed herein, at a speed of at least about 2000 m/min, more preferably at least 3000 m/min, even more preferably at least 4000 m/min, and most preferably at least 4500 m/min. Although not intending to be bound by theory, melt drawing of the multicomponent extrudates at these speeds results in at least some oriented crystallinity in the water non-dispersible component of the multicomponent fiber. This oriented crystallinity can increase the dimensional stability of non-woven materials made from the multicomponent fibers during subsequent processing.

Another advantage of the multicomponent extrudate is that it can be melt drawn to a multicomponent fiber having an as spun filament tex of less than 6.67 dtex (as-spun denier of less than 6 deniers per filament). Other ranges of multicomponent fiber sizes include an as spun filament tex of less than 4.44 dtex and less than 2.78 dtex (as-spun denier of less than 4 deniers per filament and less than 2.5 deniers per filament).
Therefore, in another embodiment as described herein, a multicomponent extrudate having a shaped cross section, comprising:
(A) at least one water dispersible sulfopolyester; and
(B) a plurality of domains comprising one or more water non-dispersible polymers immiscible with the sulfopolyester, wherein the domains are substantially isolated from each other by the sulfopolyester intervening between the domains,
   wherein the extrudate is capable of being melt drawn at a speed of at least about 2000 m/min.

The multicomponent fiber comprises a plurality of segments or domains of one or more water non-dispersible polymers immiscible with the sulfopolyester in which the segments or domains are substantially isolated from each other by the sulfopolyester intervening between the segments or domains. The term "substantially isolated", as used herein, is intended to mean that the segments or domains are set apart from each other to permit the segments domains to form individual fibers upon removal of the sulfopolyester. For example, the segments or domains may be touching each others as in, for example, a segmented pie configuration but can be split apart by impact or when the sulfopolyester is removed.

The ratio by weight of the sulfopolyester to water non-dispersible polymer component in the multicomponent fiber of the invention is generally in the range of 60:40 to about 2:98 or, in another example, in the range of 50:50 to 5:95. Typically, the sulfopolyester comprises 50% by weight or less of the total weight of the multicomponent fiber.

The segments or domains of multicomponent fiber may comprise one of more water non-dispersible polymers. Examples of water non-dispersible polymers which may be used in segments of the multicomponent fiber include, polyolefins, polyesters, polyamides, polylactides, polycaprolactone, polycarbonate, polyurethane, and polyvinyl chloride. For example, the water non-dispersible polymer may be polyester such as poly(ethylene) terephthalate, poly(butylene) terephthalate, poly(cyclohexylene) cyclohexanedicarboxylate, poly(cyclohexylene) terephthalate, and poly(trimethylene) terephthalate. In another example, the water non-dispersible polymer can be biodistintegratable as determined by DIN Standard 54900 and/or biodegradable as determined by ASTM Standard Method, D6340-98. Examples of biodegradable polyesters and polyester blends are disclosed in U.S. Patent No.'s 5,599,858; 5,580,911; 5,446,079; and 5,559,171. The term "biodegradable", as used herein in reference to the water non-dispersible polymers of the present invention, is understood to mean that the polymers are degraded under environmental influences such as, for example, in a composting environment, in an appropriate and demonstrable time span as defined, for example, by ASTM Standard Method, D6340-98, entitled "Standard Test Methods for Determining Aerobic Biodegradation of Radiolabeled Plastic Materials in an Aqueous or Compost Environment". The water non-dispersible polymers of the present invention also may be "biodisintegratable", meaning that the polymers are easily fragmented in a composting environment as defined, for example, by DIN Standard 54900. For example, the biodegradable polymer is initially reduced in molecular weight in the environment by the action of heat, water, air, microbes and other factors. This reduction in molecular weight results in a loss of physical properties (tenacity) and often in fiber breakage. Once the molecular weight of the polymer is sufficiently low, the monomers and oligomers are then assimilated by the microbes. In an aerobic environment, these monomers or oligomers are ultimately oxidized to CO₂, H₂O, and new cell biomass. In an anaerobic environment, the monomers or oligomers are ultimately converted to CO₂, H₂, acetate, methane, and cell biomass.

For example, water non-dispersible polymer may be an aliphatic-aromatic polyester, abbreviated herein as "AAPE". The term "aliphatic-aromatic polyester", as used herein, means a polyester comprising a mixture of residues from aliphatic or cycloaliphatic dicarboxylic acids or diols and aromatic dicarboxylic acids or diols. The term "non-aromatic", as used herein with respect to the dicarboxylic acid and diol monomers of the present invention, means that carboxyl or hydroxyl groups of the monomer are not connected through an aromatic nucleus. For example, adipic acid contains no aromatic nucleus in its backbone, i.e., the chain of carbon atoms connecting the carboxylic acid groups, thus is "non-aromatic". By contrast, the term "aromatic" means the dicarboxylic acid or diol contains an aromatic nucleus in the backbone such as, for example, terephthalic acid or 2,6-naphthalene dicarboxylic acid. "Non-aromatic", therefore, is intended to include both aliphatic and cycloaliphatic structures such as, for example, diols and dicarboxylic acids, which contain as a backbone a straight or branched chain or cyclic arrangement of the constituent carbon atoms which may be saturated or paraffinic in nature, unsaturated, i.e., containing non-aromatic carbon-carbon double bonds, or acetylenic, i.e., containing carbon-carbon triple bonds. Thus, in the context of the description and the claims of the present invention, non-aromatic is intended to include linear and branched, chain structures (referred to herein as "aliphatic") and cyclic structures (referred to herein as "alicyclic" or "cycloaliphatic"). The term "non-aromatic", however, is not intended to exclude any aromatic substituents which may be attached to the backbone of an aliphatic or cycloaliphatic diol or dicarboxylic acid. In the present invention, the difunctional carboxylic acid typically is a aliphatic dicarboxylic acid such as, for example, adipic acid, or an aromatic dicarboxylic acid such as, for example, terephthalic acid. The difunctional hydroxyl compound may be cycloaliphatic diol such as, for example, 1,4-cyclohexanedimethanol, a linear or branched aliphatic diol such as, for example, 1,4-butanediol, or an aromatic diol such as, for example, hydroquinone.

The AAPE may be a linear or branched random copolyester and/or chain extended copolyester comprising diol residues which comprise the residues of one or more substituted or unsubstituted, linear or branched, diols selected from aliphatic diols containing 2 to about 8 carbon atoms, polyalkylene ether glycols containing 2 to 8 carbon atoms, and cycloaliphatic diols containing about 4 to about 12 carbon atoms. The substituted diols, typically, will comprise 1 to about 4 substituents independently selected from halo, C₆-C₁₀ aryl, and C₁-C₄ alkoxy. Examples of diols which may be used includeethylene glycol, diethylene glycol, propylene glycol, 1,3-propanediol, 2,2-dimethyl-1,3-propanediol, 1,3-butanediol, 1,4-butanediol, 1,5-pentanediol, 1,6-hexanediol, polyethylene glycol, diethylene glycol, 2,2,4-trimethyl-1,6-hexanediol, thiodiethanol, 1,3-cyclohexanedimethanol, 1,4-cyclohexanedimethanol, 2,2,4,4-tetramethyl-1,3-cyclobutanediol, triethylene glycol, and tetraethylene glycol with the preferred diols comprising one or more diols selected from 1,4-butanediol; 1,3-propanediol; ethylene glycol; 1,6-hexanediol; diethylene glycol; or 1,4-cyclohexanedimethanol. The AAPE also comprises diacid residues which contain 35 to 99 mole%, based on the total moles of diacid residues, of the residues of one or more substituted or unsubstituted, linear or branched, non-aromatic dicarboxylic acids selected from aliphatic dicarboxylic acids containing 2 to 12 carbon atoms and cycloaliphatic acids containing 5 to 10 carbon atoms. The substituted non-aromatic dicarboxylic acids will typically contain 1 to about 4 substituents selected from halo, C₆-C₁₀ aryl, and C₁-C₄ alkoxy. Examples of non-aromatic diacids include malonic, succinic, glutaric, adipic, pimelic, azelaic, sebacic, fumaric, 2,2-dimethyl glutaric, suberic, 1,3-cyclopentanedicarboxylic, 1,4-cyclohexanedicarboxylic, 1,3-cyclohexanedicarboxylic, diglycolic, itaconic, maleic, and 2,5-norbornanedicarboxylic. In addition to the non-aromatic dicarboxylic acids, the AAPE comprises 1 to 65 mole%, based on the total moles of diacid residues, of the residues of one or more substituted or unsubstituted aromatic dicarboxylic acids containing 6 to 10 carbon atoms. In the case where substituted aromatic dicarboxylic acids are used, they will typically contain 1 to 4 substituents selected from halo, C₆-C₁₀ aryl, and C₁-C₄ alkoxy. Examples of aromatic dicarboxylic acids which may be used in the AAPE of our invention are terephthalic acid, isophthalic acid, salts of 5-sulfoisophthalic acid, and 2,6-naphthalenedicarboxylic acid. More preferably, the non-aromatic dicarboxylic acid will comprise adipic acid, the aromatic dicarboxylic acid will comprise terephthalic acid, and the diol will comprise 1,4-butanediol.

Other possible compositions for the AAPE's of our invention are those prepared from the following diols and dicarboxylic acids (or polyester-forming equivalents thereof such as diesters) in the following mole percentages, based on 100 mole percent of a diacid component and 100 mole percent of a diol component:
(1) glutaric acid (30 to 75%); terephthalic acid (25 to 70%); 1,4-butanediol (90 to 100%); and modifying diol (0 to 10%);
(2) succinic acid (30 to 95%); terephthalic acid (5 to 70%); 1,4-butanediol (90 to 100%); and modifying diol (0 to 10%); and
(3) adipic acid (30 to 75%); terephthalic acid (25 to 70%); 1,4-butanediol (90 to 100%); and modifying diol (0 to 10%).

The modifying diol preferably is selected from 1,4-cyclohexanedimethanol, triethylene glycol, polyethylene glycol and neopentyl glycol. The most preferred AAPE's are linear, branched or chain extended copolyesters comprising 50 to 60 mole percent adipic acid residues, 40 to 50 mole percent terephthalic acid residues, and at least 95 mole percent 1,4-butanediol residues. Even more preferably, the adipic acid residues comprise 55 to 60 mole percent, the terephthalic acid residues comprise 40 to 45 mole percent, and the diol residues comprise 95 mole percent 1,4-butanediol residues. Such compositions are commercially available under the trademark EASTAR BIO® copolyester from Eastman Chemical Company, Kingsport, TN, and under the trademark ECOFLEX® from BASF Corporation.

Additional, specific examples of preferred AAPE's include a poly(tetramethylene glutarate-co-terephthalate) containing (a) 50 mole percent glutaric acid residues, 50 mole percent terephthalic acid residues, and 100 mole percent 1,4-butanediol residues, (b) 60 mole percent glutaric acid residues, 40 mole percent terephthalic acid residues, and 100 mole percent 1,4-butanediol residues or (c) 40 mole percent glutaric acid residues, 60 mole percent terephthalic acid residues, and 100 mole percent 1,4-butanediol residues; a poly(tetramethylene - succinate-co-terephthalate) containing (a) 85 mole percent succinic acid residues, 15 mole percent terephthalic acid residues, and 100 mole percent 1,4-butanediol residues or (b) 70 mole percent succinic acid residues, 30 mole percent terephthalic acid residues, and 100 mole percent 1,4-butanediol residues; a poly(ethylene succinate-co-terephthalate) containing 70 mole percent succinic acid residues, 30 mole percent terephthalic acid residues, and 100 mole percent ethylene glycol residues; and a poly(tetramethylene adipate-co-terephthalate) containing (a) 85 mole percent adipic acid residues, 15 mole percent terephthalic acid residues, and 100 mole percent 1,4-butanediol residues; or (b) 55 mole percent adipic acid residues, 45 mole percent terephthalic acid residues, and 100 mole percent 1,4-butanediol residues.

The AAPE preferably comprises from 10 to 1,000 repeating units and preferably, from 15 to 600 repeating units. The AAPE may have an inherent viscosity of 0.4 to 2.0 dL/g, or more preferably 0.7 to 1.6 dL/g, as measured at a temperature of 25°C using a concentration of 0.5 gram copolyester in 100 ml of a 60/40 by weight solution of phenol/tetrachloroethane.

The AAPE, optionally, may contain the residues of a branching agent. The mole percentage ranges for the branching agent are from 0 to 2 mole%, preferably 0.1 to 1 mole%, and most preferably 0.1 to 0.5 mole% based on the total moles of diacid or diol residues (depending on whether the branching agent contains carboxyl or hydroxyl groups). The branching agent preferably has a weight average molecular weight of 50 to 5000, more preferably 92 to 3000, and a functionality of 3 to 6. The branching agent, for example, may be the esterified residue of a polyol having 3 to 6 hydroxyl groups, a polycarboxylic acid having 3 or 4 carboxyl groups (or ester-forming equivalent groups) or a hydroxy acid having a total of 3 to 6 hydroxyl and carboxyl groups. In addition, the AAPE may be branched by the addition of a peroxide during reactive extrusion.

Each segment of the water non-dispersible polymer may be different from others in fineness and may be arranged in any shaped or engineered cross-sectional geometry known to persons skilled in the art. For example, the sulfopolyester and a water non-dispersible polymer may be used to prepare a bicomponent fiber having an engineered geometry such as, for example, a side-by-side, "islands-in-the-sea", segmented pie, other splitables, sheath/core, or other configurations known to persons skilled in the art. Other multicomponent configurations are also possible. Subsequent removal of a side, the "sea", or a portion of the "pie" can result in very fine fibers. The process of preparing bicomponent fibers also is well known to persons skilled in the art. In a bicomponent fiber, the sulfopolyester fibers of this invention may be present in amounts of 10 to 90 weight% and will generally be used in the sheath portion of sheath/core fibers. The other component may be from a wide range of other polymeric materials such as, for example, poly(ethylene) terephthalate, poly(butylene) terephthalate, poly(trimethylene) terephthalate, polylactides as well as polyolefins, cellulose esters, and polyamides. Typically, when a water-insoluble or water non-dispersible polymer is used, the resulting bicomponent or multicomponent fiber is not completely water-dispersible. Side by side combinations with significant differences in thermal shrinkage can be utilized for the development of a spiral crimp. If crimping is desired, a saw tooth or stuffer box crimp is generally suitable for many applications. If the second polymer component is in the core of a sheath/core configuration, such a core optionally may be stabilized.

The sulfopolyesters are particularly useful for fibers having an "islands-in-the-sea" or "segmented pie" cross section as they only requires neutral or slightly acidic (i.e., "soft" water) to disperse, as compared to the caustic-containing solutions that are sometimes required to remove other water dispersible polymers from multicomponent fibers. Another aspect is a multicomponent fiber, comprising:
(A) a water dispersible sulfopolyester having a glass transition temperature (Tg) of at least 57°C, the sulfopolyester comprising:
   (i) about 50 to about 96 mole% of one or more residues of isophthalic acid or terephthalic acid, based on the total acid residues;
   (ii) 4 to 30 mole%, based on the total acid residues, of a residue of sodiosulfoisophthalic acid;
   (iii) one or more diol residues wherein at least 25 mole%, based on the total diol residues, is a poly(ethylene glycol) having a structure

      H-(OCH₂-CH₂)ₙ-OH

      wherein n is an integer in the range of 2 to 500;
   (iv) 0 to 20 mole%, based on the total repeating units, of residues of a branching monomer having 3 or more functional groups wherein the functional groups are hydroxyl, carboxyl, or a combination thereof; and
(B) a plurality of segments comprising one or more water non-dispersible polymers immiscible with the sulfopolyester, wherein the segments are substantially isolated from each other by the sulfopolyester intervening between the segments;
   wherein the fiber has an islands-in-the-sea or segmented pie cross section and contains less than 10 weight percent of a pigment or filler, based on the total weight of the fiber.
The dicarboxylic acids, diols, sulfopolyester, sulfomonomers, branching monomers residues, and water non-dispersible polymers are as described previously. For multicomponent fibers, it is advantageous that sulfopolyester have a Tg of at least 57°C. The sulfopolyester may be a single sulfopolyester or a blend of one or more sulfopolyester polymers. Further examples of glass transition temperatures of the sulfopolyester or sulfopolyester blends are at least 65°C, at least 70°C, at least 75°C, at least 85°C, and at least 90°C. For example, the sulfopolyester may comprise about 75 to about 96 mole% of one or more residues of isophthalic acid or terephthalic acid and about 25 to about 95 mole% of a residue of diethylene glycol. As described hereinabove, examples of the water non-dispersible polymers are polyolefins, polyesters, polyamides, polylactides, polycaprolactone, polycarbonate, polyurethane, and polyvinyl chloride. In addition, the water non-dispersible polymer may be biodegradable or biodisintegratable. For example, the water non-dispersible polymer may be an aliphatic-aromatic polyester as described previously.

Our multicomponent fiber may be prepared by any number of methods known to persons skilled in the art. As described herein is a process for a multicomponent fiber having a shaped cross section comprising: spinning a water dispersible sulfopolyester having a glass transition temperature (Tg) of at least 57°C and one or more water non-dispersible polymers immiscible with the sulfopolyester into a fiber, the sulfopolyester comprising:
(i) residues of one or more dicarboxylic acids;
(ii) 4 to 40 mole%, based on the total repeating units, of residues of at least one sulfomonomer having 2 functional groups and one or more sulfonate groups attached to an aromatic or cycloaliphatic ring wherein the functional groups are hydroxyl, carboxyl, or a combination thereof;
(iii) one or more diol residues wherein at least 25 mole%, based on the total diol residues, is a poly(ethylene glycol) having a structure

   H-(OCH₂-CH₂)ₙ-OH

   wherein n is an integer in the range of 2 to 500; and
(iv) 0 to 25 mole%, based on the total repeating units, of residues of a branching monomer having 3 or more functional groups wherein the functional groups are hydroxyl, carboxyl, or a combination thereof; wherein the fiber has a plurality of segments comprising the water non-dispersible polymers and the segments are substantially isolated from each other by the sulfopolyester intervening between the segments and the fiber contains less than 10 weight percent of a pigment or filler, based on the total weight of the fiber. For example, the multicomponent fiber may be prepared by melting the sulfopolyester and one or more water non-dispersible polymers in separate extruders and directing the individual polymer flows into one spinneret or extrusion die with a plurality of distribution flow paths such that the water non-dispersible polymer component form small segments or thin strands which are substantially isolated from each other by the intervening sulfopolyester. The cross section of such a fiber may be, for example, a segmented pie arrangement or an islands-in-the-sea arrangement. In another example, the sulfopolyester and one or more water non-dispersible polymers are separately fed to the spinneret orifices and then extruded in sheath-core form in which the water non-dispersible polymer forms a "core" that is substantially enclosed by the sulfopolyester "sheath" polymer. In the case of such concentric fibers, the orifice supplying the "core" polymer is in the center of the spinning orifice outlet and flow conditions of core polymer fluid are strictly controlled to maintain the concentricity of both components when spinning. Modifications in spinneret orifices enable different shapes of core and/or sheath to be obtained within the fiber cross-section. In yet another example, a multicomponent fiber having a side-by-side cross section or configuration may be produced by coextruding the water dispersible sulfopolyester and water non-dispersible polymer through orifices separately and converging the separate polymer streams at substantially the same speed to merge side-by-side as a combined stream below the face of the spinneret; or (2) by feeding the two polymer streams separately through orifices, which converge at the surface of the spinneret, at substantially the same speed to merge side-by-side as a combined stream at the surface of the spinneret. In both cases, the velocity of each polymer stream, at the point of merge, is determined by its metering pump speed, the number of orifices, and the size of the orifice.

The dicarboxylic acids, diols, sulfopolyester, sulfomonomers, branching monomers residues, and water non-dispersible polymers are as described previously. The sulfopolyester has a glass transition temperature of at least 57°C. Further examples of glass transition temperatures of the sulfopolyester or sulfopolyester blend are at least 65°C, at least 70°C, at least 75°C, at least 85°C, and at least 90°C. In one example, the sulfopolyester may comprise about 50 to about 96 mole% of one or more residues of isophthalic acid or terephthalic acid, based on the total acid residues; and about 4 to about 30 mole%, based on the total acid residues, of a residue of sodiosulfoisophthalic acid; and 0 to about 20 mole%, based on the total repeating units, of residues of a branching monomer having 3 or more functional groups wherein the functional groups are hydroxyl, carboxyl, or a combination thereof. In another example, the sulfopolyester may comprise 75 to 96 mole% of one or more residues of isophthalic acid or terephthalic acid and 25 to 95 mole% of a residue of diethylene glycol. As described hereinabove, examples of the water non-dispersible polymers are polyolefins, polyesters, polyamides, polylactides, polycaprolactone, polycarbonate, polyurethane, and polyvinyl chloride. In addition, the water non-dispersible polymer may be biodegradable or biodisintegratable. For example, the water non-dispersible polymer may be an aliphatic-aromatic polyester as described previously. Examples of shaped cross sections include islands-in-the-sea, side-by-side, sheath-core, or segmented pie configurations.

In another embodiment of the invention, a process for making a multicomponent fiber having a shaped cross section is provided comprising: spinning at least one water dispersible sulfopolyester and one or more water non-dispersible polymers immiscible with the sulfopolyester to produce a multicomponent fiber, wherein the multicomponent fiber has a plurality of domains comprising the water non-dispersible polymers and the domains are substantially isolated from each other by the sulfopolyester intervening between the domains; wherein the water dispersible sulfopolyester has a melt viscosity of less than 1200 Pa·s (12,000 poise) measured at 240°C at a strain rate of 1 rad/sec, and wherein the sulfopolyester comprising less than about 25 mole % of residues of at least one sulfomonomer, based on the total moles of diacid or diol residues; and wherein the multicomponent fiber has an as spun filament tex of less than 6.67 dtex (as-spun denier of less than 6 denier per filament).

The sulfopolyester utilized in these multicomponent fiber and the water non-dispersible polymers were discussed previously in this disclosure.

In another embodiment as described herein, a process for making a multicomponent fiber having a shaped cross section is provided comprising: (A) extruding at least one water dispersible sulfopolyester and one or more water non-dispersible polymers immiscible with said sulfopolyester to produce a multicomponent extrudate, wherein the multicomponent extrudate has a plurality of domains comprising the water non-dispersible polymers and the domains are substantially isolated from each other by the sulfopolyester intervening between the domains; and (B) melt drawing the multicomponent extrudate at a speed of at least about 2000 m/min to produce the multicomponent fiber.

It is also a feature of this embodiment of the invention that the process includes the step of melt drawing the multicomponent extrudate at a speed of at least 2000 m/min, more preferably, at least 3000 m/min, and most preferably at least 4500 m/min.

Typically, upon exiting the spinneret, the fibers are quenched with a cross flow of air whereupon the fibers solidify. Various finishes and sizes may be applied to the fiber at this stage. The cooled fibers, typically, are subsequently drawn and wound up on a take up spool. Other additives may be incorporated in the finish in effective amounts like emulsifiers, antistatics, antimicrobials, antifoams, lubricants, thermostabilizers, and UV stabilizers.

Optionally, the drawn fibers may be textured and wound-up to form a bulky continuous filament. This one-step technique is known in the art as spin-draw-texturing. Other embodiments include flat filament (non-textured) yarns, or cut staple fiber, either crimped or uncrimped.

The sulfopolyester may be later removed by dissolving the interfacial layers or pie segments and leaving the smaller filaments or microdenier fibers of the water non-dispersible polymer(s). Disclosed herein is a process for microdenier fibers comprising:
(A) spinning a water dispersible sulfopolyester having a glass transition temperature (Tg) of at least 57°C and one or more water non-dispersible polymers immiscible with the sulfopolyester into multicomponent fibers, the sulfopolyester comprising:
   (i) 50 to 96 mole% of one or more residues of isophthalic acid or terephthalic acid, based on the total acid residues;
   (ii) 4 to 30 mole%, based on the total acid residues, of a residue of sodiosulfoisophthalic acid;
   (iii) one or more diol residues wherein at least 25 mole%, based on the total diol residues, is a poly(ethylene glycol) having a structure

      H-(OCH₂-CH₂)ₙ-OH

      wherein n is an integer in the range of 2 to 500; and
   (iv) 0 to 20 mole%, based on the total repeating units, of residues of a branching monomer having 3 or more functional groups wherein the functional groups are hydroxyl, carboxyl, or a combination thereof;
      wherein the fibers have a plurality of segments comprising the water non-dispersible polymers wherein the segments are substantially isolated from each other by the sulfopolyester intervening between the segments and the fibers contain less than 10 weight percent of a pigment or filler, based on the total weight of the fibers; and
(B) contacting the multicomponent fibers with water to remove the sulfopolyester thereby forming microdenier fibers.

Typically, the multicomponent fiber is contacted with water at a temperature of 25°C to 100°C, preferably 50°C to 80°C for a time period of from 10 to 600 seconds whereby the sulfopolyester is dissipated or dissolved. After removal of the sulfopolyester, the remaining microfibers typically will have an average fineness of 1.11 dtex or less, 0.55 dtex or less, 0.11 dtex or less·per filament (1 d/f or less, typically, 0.5 d/f or less, or more typically, 0.1 d/f or less). Typical applications of these remaining microfibers include artificial leathers, suedes, wipes, and filter media. The ionic nature of sulfopolyesters also results in advantageously poor "solubility" in saline media, such as body fluids. Such properties are desirable in personal care products and cleaning wipes that are flushable or otherwise disposed in sanitary sewage systems. Selected sulfopolyesters have also been utilized as dispersing agents in dye baths and soil redeposition preventative agents during laundry cycles.

In another embodiment of the present invention, a process for making microdenier fibers is provided comprising spinning at least one water dispersible sulfopolyester and one or more water non-dispersible polymers immiscible with the water dispersible sulfopolyester into multicomponent fibers, wherein said multicomponent fibers have a plurality of domains comprising said water non-dispersible polymers wherein the domains are substantially isolated from each other by the sulfopolyester intervening between the domains; wherein the fiber has an as spun filament tex of less than 6.67 dtex (as-spun denier of less than about 6 denier per filament); wherein the water dispersible sulfopolyester has a melt viscosity of less than about1200 Pa·s (12,000 poise) measured at 240°C at a strain rate of 1 rad/sec, and wherein the sulfopolyester comprising less than about 25 mole % of residues of at least one sulfomonomer, based on the total moles of diacid or diol residues; and contacting the multicomponent fibers with water to remove the water dispersible sulfopolyester thereby forming microdenier fibers.

Disclosed herein is a process for making microdenier fibers comprises:
(A) extruding at least one water dispersible sulfopolyester and one or more water non-dispersible polymers immiscible with said water dispersible sulfopolyester to produce multicomponent extrudates, wherein said multicomponent extrudates have a plurality of domains comprising said water non-dispersible polymers wherein said domains are substantially isolated from each other by said sulfopolyester intervening between said domains;
(B) melt drawing said multicomponent extrudates at a speed of at least 2000 m/min to form multicomponent fibers; and
(C) contacting said multicomponent fibers with water to remove said water dispersible sulfopolyester thereby forming microdenier fibers.

It is preferable that the melt drawing of the multicomponent extrudates at a speed of at least 2000 m/min, more preferably at least 3000 m/min, and most preferably at least 4500 m/min.

Such sulfomonomers and sulfopolyesters suitable for use in accordance with the invention are described above.

As the preferred sulfopolyesters for use in accordance with this aspect of the invention are generally resistant to removal during subsequent hydroentangling processes, it is preferable that the water used to remove the sulfopolyester from the multicomponent fibers be above room temperature, more preferably the water is at least 45°C, even more preferably at least 60°C, and most preferably at least 80°C.

The instant invention also includes a fibrous article comprising the water-dispersible fiber, the multicomponent fiber, or the microdenier fibers described hereinabove. The term "fibrous article" is understood to mean any article having or resembling fibers. Examples of fibrous articles include multifilament fibers, yarns, cords, tapes, fabrics, melt blown webs, spunbonded webs, thermobonded webs, hydroentangled webs, nonwoven webs and fabrics, and combinations thereof; items having one or more layers of fibers, such as, for example, multilayer nonwovens, laminates, and composites from such fibers, gauzes, bandages, diapers, training pants, tampons, surgical gowns and masksand feminine napkins. Further, the fibrous articles may include replacement inserts for various personal hygiene and cleaning products. The fibrous article of the present invention may be bonded, laminated, attached to, or used in conjunction with other materials which may or may not be water-dispersible. The fibrous article, for example, a nonwoven fabric layer, may be bonded to a flexible plastic film or backing of a water non-dispersible material, such as polyethylene. Such an assembly, for example, could be used as one component of a disposable diaper. In addition, the fibrous article may result from overblowing fibers onto another substrate to form highly assorted combinations of engineered melt blown, spunbond, film, or membrane structures.

The fibrous articles of the instant invention include nonwoven fabrics and webs. A nonwoven fabric is defined as a fabric made directly from fibrous webs without weaving or knitting operations. For example, the multicomponent fiber of the present invention may be formed into a fabric by any known fabric forming process like knitting, weaving, needle punching, and hydroentangling. The resulting fabric or web may be converted into a microdenier fiber web by exerting sufficient force to cause the multicomponent fibers to split or by contacting the web with water to remove the sulfopolyester leaving the remaining microdenier fibers behind. Disclosed herein is a process for a microdenier fiber web, comprising:
(A) spinning a water dispersible sulfopolyester having a glass transition temperature (Tg) of at least 57°C and one or more water non-dispersible polymers immiscible with the sulfopolyester into multicomponent fibers, the sulfopolyester comprising:
   (i) 50 to 96 mole% of one or more residues of isophthalic acid or terephthalic acid, based on the total acid residues;
   (ii) 4 to 30 mole%, based on the total acid residues, of a residue of sodiosulfoisophthalic acid;
   (iii) one or more diol residues wherein at least 25 mole%, based on the total diol residues, is a poly(ethylene glycol) having a structure H-(O

      CH₂-CH₂)ₙ-OH

      wherein n is an integer in the range of 2 to 500; and
   (iv) 0 to 20 mole %, based on the total repeating units, of residues of a branching monomer having 3 or more functional groups wherein the functional groups are hydroxyl, carboxyl, or a combination thereof.
   wherein the multicomponent fibers have a plurality of segments comprising the water non-dispersible polymers wherein the segments are substantially isolated from each other by the sulfopolyester intervening between the segments; and the fiber contains less than 10 weight percent of a pigment or filler, based on the total weight of the fiber;
(B) overlapping and collecting the multicomponent fibers of Step A to form a nonwoven web; and
(C) contacting the nonwoven web with water to remove the sulfopolyester thereby forming a microdenier fiber web.

In another embodiment of the invention, a process for a microdenier fiber web is provided which comprises:
(A) spinning at least one water dispersible sulfopolyester and one or more water non-dispersible polymers immiscible with said sulfopolyester into multicomponent fibers, said multicomponent fibers have a plurality of domains comprising said water non-dispersible polymers wherein said domains are substantially isolated from each other by said sulfopolyester intervening between said domains; wherein said fiber has an as spun filament tex of less than 6.67 dtex (as-spun denier of less than 6 denier per filament); wherein said water dispersible sulfopolyester has a melt viscosity of less than 1200 Pa·s (12,000 poise) measured at 240°C at a strain rate of 1 rad/sec, and wherein said sulfopolyester comprising less than 25 mole % of residues of at least one sulfomonomer, based on the total moles of diacid or diol residues;
(B) collecting said multicomponent fibers of Step A) to form a non-woven web; and
(C) contacting said non-woven web with water to remove said sulfopolyester thereby forming a microdenier fiber web.

Disclosed herein is a process for a microdenier fiber web which comprises:
(A) extruding at least one water dispersible sulfopolyester and one or more water non-dispersible polymers immiscible with said water dispersible sulfopolyester into multicomponent extrudates, said multicomponent extrudates have a plurality of domains comprising said water non-dispersible polymers wherein said domains are substantially isolated from each other by said water dispersible sulfopolyester intervening between said domains;
(B) melt drawing said multicomponent extrudates at a speed of at least about 2000 m/min to produce multicomponent fibers;
(C) collecting said multicomponent fibers of Step (B) to form a non-woven web; and
(D) contacting said non-woven web with water to remove said sulfopolyester thereby forming a microdenier fiber web.

The process also preferably comprises prior to Step (C) the step of hydroentangling the multicomponent fibers of the non-woven web. It is also preferable that the hydroentangling step results in a loss of less than 20 wt. % of the sulfopolyester contained in the multicomponent fibers, more preferably this loss is less than 15 wt. %, and most preferably is less than 10 wt. %. In furtherance of the goal of reducing the loss of sulfopolyester during hydroentanglement, the water used during this process preferably has a temperature of less than 45°C, more preferably less than 35°C, and most preferably less than 30°C. It is preferable that the water used during hydroentanglement be as close to room temperature as possible to minimize loss of sulfopolyester from the multicomponent fibers. Conversely, removal of the sulfopolyester polymer during Step (C) is preferably carried out using water having a temperature of at least 45°C, more preferably at least 60°C, and most preferably at least 80°C.

After hydroentanglement and prior to Step (C), the non-woven web may under go a heat setting step comprising heating the non-woven web to a temperature of at least 100°C, and more preferably at least 120°C. The heat setting step relaxes out internal fiber stresses and aids in producing a dimensionally stable fabric product. It is preferred that when the heat set material is reheated to the temperature to which it was heated during the heat setting step that it has surface area shrinkage of less than 5% of its original surface area. More preferably, the shrinkage is less than 2% of the original surface area, and most preferably the shrinkage is less than 1%.

The sulfopolyester used in the multicomponent fiber can be any of those described herein, however, it is preferable that the sulfopolyester have a melt viscosity of less than 600 Pa·s (6000 poise) measured at 240°C at a strain rate of 1 rad/sec and comprise less than 12 mole %, based on the total repeating units, of residues of at least one sulfomonomer. These types of sulfopolyesters are previously described herein.

Furthermore, the inventive method preferably comprises the step of drawing the multicomponent fiber at a fiber velocity of at least 2000 m/min, more preferably at least 3000 m/min, even more preferably at least 4000 m/min, and most preferably at least 5000 m/min.

The nonwoven assembly is held together by 1) mechanical fiber cohesion and interlocking in a web or mat; 2) various techniques of fusing of fibers, including the use of binder fibers, utilizing the thermoplastic properties of certain polymers and polymer blends; 3) use of a binding resin such as starch, casein, a cellulose derivative, or a synthetic resin, such as an acrylic latex or urethane; 4) powder adhesive binders; or 5) combinations thereof. The fibers are often deposited in a random manner, although orientation in one direction is possible, followed by bonding using one of the methods described above.

The fibrous articles of our invention further also may comprise one or more layers of water-dispersible fibers, multicomponent fibers, or microdenier fibers. The fiber layers may be one or more nonwoven fabric layers, a layer of loosely bound overlapping fibers, or a combination thereof. In addition, the fibrous articles may include personal and health care products such as child care products, such as infant diapers; child training pants; adult care products, such as adult diapers and adult incontinence pads; feminine care products, such as feminine napkins, panty liners, and tampons; wipes; fiber-containing cleaning products; medical and surgical care products, such as medical wipes, tissues, gauzes, examination bed coverings, surgical masks, gowns, bandages, and wound dressings; fabrics; elastomeric yarns, wipes, tapes, other protective barriers, and packaging material. The fibrous articles may be used to absorb liquids or may be pre-moistened with various liquid compositions and used to deliver these compositions to a surface. Examples of liquid compositions include detergents; wetting agents; cleaning agents; skin care products, such as cosmetics, ointments, medications, emollients, and fragrances. The fibrous articles also may include various powders and particulates to improve absorbency or as delivery vehicles. Examples of powders and particulates includetalc, starches, various water absorbent, water-dispersible, or water swellable polymers, such as super absorbent polymers, sulfopolyesters, and poly(vinylalcohols), silica, pigments, and microcapsules. Additives may also be present, but are not required, as needed for specific applications. Examples of additives includeoxidative stabilizers, UV absorbers, colorants, pigments, opacifiers (delustrants), optical brighteners, fillers, nucleating agents, plasticizers, viscosity modifiers, surface modifiers, antimicrobials, disinfectants, cold flow inhibitors, branching agents, and catalysts.

In addition to being water-dispersible, the fibrous articles described above may be flushable. The term "flushable" as used herein means capable of being flushed in a conventional toilet, and being introduced into a municipal sewage or residential septic system, without causing an obstruction or blockage in the toilet or sewage system.

The fibrous article may further comprise a water-dispersible film comprising a second water-dispersible polymer. The second water-dispersible polymer may be the same as or different from the previously described water-dispersible polymers used in the fibers and fibrous articles of the present invention. In one embodiment, for example, the second water-dispersible polymer may be an additional sulfopolyester which, in turn, comprises:
(A) 50 to 96 mole% of one or more residues of isophthalic acid or terephthalic acid, based on the total acid residues;
(B) 4 to 30 mole%, based on the total acid residues, of a residue of sodiosulfoisophthalic acid;
(C) one or more diol residues wherein at least 15 mole%, based on the total diol residues, is a poly(ethylene glycol) having a structure

   H-(OCH₂-CH₂)ₙ-OH

   wherein n is an integer in the range of 2 to 500;
(D) 0 to 20 mole%, based on the total repeating units, of residues of a branching monomer having 3 or more functional groups wherein the functional groups are hydroxyl, carboxyl, or a combination thereof. The additional sulfopolyester may be blended with one or more supplemental polymers, as described hereinabove, to modify the properties of the resulting fibrous article. The supplemental polymer may or may not be water-dispersible depending on the application. The supplemental polymer may be miscible or immiscible with the additional sulfopolyester.

The additional sulfopolyester may contain other concentrations of isophthalic acid residues, for example, 60 to 95 mole%, and 75 to 95 mole%. Further examples of isophthalic acid residue concentrations ranges are 70 to 85 mole%, 85 to 95 mole% and 90 to 95 mole%. The additional sulfopolyester also may comprise 25 to 95 mole% of the residues of diethylene glycol. Further examples of diethylene glycol residue concentration ranges include 50 to 95 mole%, 70 to 95 mole%, and 75 to 95 mole%. The additional sulfopolyester also may include the residues of ethylene glycol and/or 1,4-cyclohexanedimethanol. Typical concentration ranges of CHDM residues are 10 to 75 mole%, 25 to 65 mole%, and 40 to 60 mole%. Typical concentration ranges of ethylene glycol residues are 10 to 75 mole%, 25 to 65 mole%, and 40 to 60 mole%. In another embodiment, the additional sulfopolyester comprises is 75 to about 96 mole% of the residues of isophthalic acid and 25 to 95 mole% of the residues of diethylene glycol.

According to the invention, the sulfopolyester film component of the fibrous article may be produced as a monolayer or multilayer film. The monolayer film may be produced by conventional casting techniques. The multilayered films may be produced by conventional lamination methods. The film may be of any convenient thickness, but total thickness will normally be between 2 and 50 mil.

The film-containing fibrous articles may include one or more layers of water-dispersible fibers as described above. The fiber layers may be one or more nonwoven fabric layers, a layer of loosely bound overlapping fibers, or a combination thereof. In addition, the film-containing fibrous articles may include personal and health care products as described hereinabove.

As described previously, the fibrous articles also may include various powders and particulates to improve absorbency or as delivery vehicles. Thus, in one embodiment, our fibrous article comprises a powder comprising a third water-dispersible polymer that may be the same as or different from the water-dispersible polymer components described previously herein. Other examples of powders and particulates include talc, starches, various water absorbent, water-dispersible, or water swellable polymers, such as poly(acrylonitiles), sulfopolyesters, and poly(vinyl alcohols), silica, pigments, and microcapsules.

Our fiber and fibrous articles have many possible uses in addition to the applications described above. One application involves the melt blowing a film or nonwoven fabric onto flat, curved, or shaped surfaces to provide a protective layer. One such layer might provide surface protection to durable equipment during shipping. At the destination, before putting the equipment into service, the outer layers of sulfopolyester could be washed off. A further embodiment of this general application concept could involve articles of personal protection to provide temporary barrier layers for some reusable or limited use garments or coverings. For the military, activated carbon and chemical absorbers could be sprayed onto the attenuating filament pattern just prior to the collector to allow the melt blown matrix to anchor these entities on the exposed surface. The chemical absorbers can even be changed in the forward operations area as the threat evolves by melt blowing on another layer.

A major advantage inherent to sulfopolyesters is the facile ability to remove or recover the polymer from aqueous dispersions via flocculation or precipitation by adding ionic moieties (i.e., salts). Other methods, such as pH adjustment, adding nonsolvents, freezing, and so forth may also be employed. Therefore, fibrous articles, such as outer wear protective garments, after successful protective barrier use and even if the polymer is rendered as hazardous waste, can potentially be handled safely at much lower volumes for disposal using accepted protocols, such as incineration.

Undissolved or dried sulfopolyesters are known to form strong adhesive bonds to a wide array of substrates, including fluff pulp, cotton, acrylics, rayon, lyocell, PLA (polylactides), cellulose acetate, cellulose acetate propionate, poly(ethylene) terephthalate, poly(butylene) terephthalate, poly(trimethylene) terephthalate, poly(cyclohexylene) terephthalate, copolyesters, polyamides (nylons), stainless steel, aluminum, treated polyolefins, PAN (polyacrylonitriles), and polycarbonates. Thus, our nonwoven fabrics may be used as laminating adhesives or binders that may be bonded by known techniques, such as thermal, radio frequency (RF), microwave, and ultrasonic methods. Adaptation of sulfopolyesters to enable RF activation is disclosed in a number of recent patents. Thus, our nonwoven fabrics may have dual or even multifunctionality in addition to adhesive properties. For example, a disposable baby diaper could be obtained where a nonwoven of the present invention serves as both an water-responsive adhesive as well as a fluid managing component of the final assembly.

Disclosed herein is a process for water-dispersible fibers comprising:
(A) heating a water-dispersible polymer composition to a temperature above its flow point, wherein the polymer composition comprises:
   (i) residues of one or more dicarboxylic acids;
   (ii) 4 to 40 mole%, based on the total repeating units, of residues of at least one sulfomonomer having 2 functional groups and one or more metal sulfonate groups attached to an aromatic or cycloaliphatic ring wherein the functional groups are hydroxyl, carboxyl, or a combination thereof; and
   (iii) one or more diol residues wherein at least 20 mole%, based on the total diol residues, is a poly(ethylene glycol) having a structure

      H-(OCH₂-CH₂)ₙ-OH

      wherein n is an integer in the range of 2 to 500; (iv) 0 to 25 mole%, based on the total repeating units, of residues of a branching monomer having 3 or more functional groups wherein the functional groups are hydroxyl, carboxyl, or a combination thereof; wherein the polymer composition contains less than 10 weight percent of a pigment or filler, based on the total weight of the polymer composition; and (II) melt spinning filaments. As described hereinabove, a water-dispersible polymer, optionally, may be blended with the sulfopolyester. In addition, a water non-dispersible polymer, optionally, may be blended with the sulfopolyester to form a blend such that blend is an immiscible blend. The term "flow point", as used herein, means the temperature at which the viscosity of the polymer composition permits extrusion or other forms of processing through a spinneret or extrusion die. The dicarboxylic acid residue may comprise from 60 to 100 mole% of the acid residues depending on the type and concentration of the sulfomonomer. Other examples of concentration ranges of dicarboxylic acid residues are from about 60 mole% to 95 mole% and 70 mole% to 95 mole%. The preferred dicarboxylic acid residues are isophthalic, terephthalic, and 1,4-cyclohexanedicarboxylic acids or if diesters are used, dimethyl terephthalate, dimethyl isophthalate, and dimethyl-1,4-cyclohexanedicarboxylate with the residues of isophthalic and terephthalic acid being especially preferred.

The sulfomonomer may be a dicarboxylic acid or ester thereof containing a sulfonate group, a diol containing a sulfonate group, or a hydroxy acid containing a sulfonate group. Additional examples of concentration ranges for the sulfomonomer residues are 4 to 25 mole%, 4 to 20 mole%, 4 to 15 mole%, and 4 to 10 mole%, based on the total repeating units. The cation of the sulfonate salt may be a metal ion such as Li⁺, Na⁺, K⁺, Mg⁺⁺, Ca⁺⁺, Ni⁺⁺ and Fe⁺⁺,. Alternatively, the cation of the sulfonate salt may be non-metallic such as a nitrogenous base as described previously. Examples of sulfomonomer residues which may be used in the process as described herein are the metal sulfonate salt of sulfophthalic acid, sulfoterephthalic acid, sulfoisophthalic acid, or combinations thereof. Another example of sulfomonomer which may be used is 5-sodiosulfoisophthalic acid or esters thereof. If the sulfomonomer residue is from 5-sodiosulfoisophthalic acid, typical sulfomonomer concentration ranges are 4 to 35 mole%, 8 to 30 mole %, and 10 to 25 mole %, based on the total acid residues.

The sulfopolyester includes one or more diol residues which may include aliphatic, cycloaliphatic, and aralkyl glycols. The cycloaliphatic diols, for example, 1,3- and 1,4-cyclohexanedimethanol, may be present as their pure *cis* or *trans* isomers or as a mixture of *cis* and *trans* isomers. Examples of lower molecular weight polyethylene glycols, e.g., wherein n is from 2 to 6, are diethylene glycol, triethylene glycol, and tetraethylene glycol. Of these lower molecular weight glycols, diethylene and triethylene glycol are most preferred. The sulfopolyester may optionally include a branching monomer. Examples of branching monomers are as described hereinabove. Further examples of branching monomer concentration ranges are from 0 to 20 mole% and from 0 to 10 mole%. The sulfopolyester of the process has a Tg of at least 25°C. Further examples of glass transition temperatures of the sulfopolyester are at least 30°C, at least 35°C, at least 40°C, at least 50°C, at least 60°C, at least 65°C, at least 80°C, and at least 90°C. Although other Tg's are possible, typical glass transition temperatures of the dry sulfopolyesters our invention are about 48°C, about 55°C, about 65°C, about 70°C, about 75°C, about 85°C, and about 90°C.

The water-dispersible fibers are prepared by a melt blowing process. The polymer is melted in an extruder and forced through a die. The extrudate exiting the die is rapidly attenuated to ultrafine diameters by hot, high velocity air. The orientation, rate of cooling, glass transition temperature (T_{g}), and rate of crystallization of the fiber are important because they affect the viscosity and processing properties of the polymer during attenuation. The filament is collected on a renewable surface, such as a moving belt, cylindrical drum, rotating mandrel, and so forth. Predrying of pellets (if needed), extruder zone temperature, melt temperature, screw design, throughput rate, air temperature, air flow (velocity), die air gap and set back, nose tip hole size, die temperature, die-to-collector (DCP) distance, quenching environment, collector speed, and post treatments are all factors that influence product characteristics such as filament diameters, basis weight, web thickness, pore size, softness, and shrinkage. The high velocity air also may be used to move the filaments in a somewhat random fashion that results in extensive interlacing. If a moving belt is passed under the die, a nonwoven fabric can be produced by a combination of over-lapping laydown, mechanical cohesiveness, and thermal bonding of the filaments. Overblowing onto another substrate, such as a spunbond or backing layer, is also possible. If the filaments are taken up on an rotating mandrel, a cylindrical product is formed. A water-dispersible fiber lay-down can also be prepared by the spunbond process.

Described herein is a process for water-dispersible, nonwoven fabric comprising:
(A) heating a water-dispersible polymer composition to a temperature above its flow point, wherein the polymer composition comprises:
   (i) residues of one or more dicarboxylic acids;
   (ii) 4 to 40 mole%, based on the total repeating units, of residues of at least one sulfomonomer having 2 functional groups and one or more metal sulfonate groups attached to an aromatic or cycloaliphatic ring wherein the functional groups are hydroxyl, carboxyl, or a combination thereof;
   (iii) one or more diol residues wherein at least 20 mole%, based on the total diol residues, is a poly(ethylene glycol) having a structure

      H-(OCH₂-CH₂)ₙ-OH

      wherein n is an integer in the range of 2 to 500;
   (iv) 0 to 25 mole%, based on the total repeating units, of residues of a branching monomer having 3 or more functional groups wherein the functional groups are hydroxyl, carboxyl, or a combination thereof; wherein the sulfopolyester has a glass transition temperature (Tg) of at least 25°C; wherein the polymer composition contains less than 10 weight percent of a pigment or filler, based on the total weight of the polymer composition;
(B) melt-spinning filaments; and
(C) overlapping and collecting the filaments of Step (B) to form a nonwoven fabric. As described hereinabove, a water-dispersible polymer, optionally, may be blended with the sulfopolyester. In addition, a water non-dispersible polymer, optionally, may be blended with the sulfopolyester to form a blend such that blend is an immiscible blend. The dicarboxylic acid, sulfomonomer, and branching monomer residues are as described previously. The sulfopolyester has a Tg of at least 25°C. Further examples of glass transition temperatures of sulfopolyester are at least 30°C, at least 35°C, at least 40°C, at least 50°C, at least 60°C, at least 65°C, at least 80°C, and at least 90°C. Although other Tg's are possible, typical glass transition temperatures of the dry sulfopolyesters our invention are about 48°C, about 55°C, about 65°C, about 70°C, about 75°C, about 85°C, and about 90°C. The invention is further illustrated by the following examples.

### EXAMPLES

All pellet samples were predried under vacuum at room temperature for at least 12 hours. The dispersion times shown in Table 3 are for either complete dispersion or dissolution of the nonwoven fabric samples. The abbreviation "CE", used in Tables 2 and 3 mean "comparative example".

### Example 1

A sulfopolyester containing 76 mole%, isophthalic acid, 24 mole% of sodiosulfoisophthalic acid, 76 mole% diethylene glycol, and 24 mole% 1,4-cyclohexanedimethanol with an Ih.V. of 0.29 and a Tg of 48°C was meltblown through a nominal 15.24 cm (6-inch) die (30 holes/2.54 cm (inch) in the nosepiece) onto a cylindrical collector using the conditions shown in Table 1. Interleafing paper was not required. A soft, handleable, flexible web was obtained that did not block during the roll winding operation. Physical properties are provided in Table 2. A small piece (1" x 3") of the nonwoven fabric was easily dispersed in both room temperature (RT) and 50°C water with slight agitation as shown by data in Table 3.

**Table 1 - Melt Blowing Conditions**

| Operating Condition | Typical Value |
|---|---|
| *Die Configuration* | |
| Die tip hole diameter | 0.4699 cm (0.0185 inches) |
| Number of holes | 120 |
| Air gap | 0.01524 cm (0.060 inches) |
| Set back | 0.01524 cm (0.060 inches) |

| *Extruder Barrel Temperatures (°F)* | |
|---|---|
| Zone 1 | 176.67 °C (350) |
| Zone 2 | 265.56 °C (510) |
| Zone 3 | 265.56 °C (510) |

| *Die Temperatures (°F)* | |
|---|---|
| Zone 4 | 265.56 °C (510) |
| Zone 5 | 265.56 °C (510) |
| Zone 6 | 265.56 °C (510) |
| Zone 7 | 265.56 °C (510) |
| Zone 8 | 265.56 °C (510) |

| *Air Temperatures (°F)* | |
|---|---|
| Furnace exit 1 | 176.67 °C (350) |
| Furnace exit 2 | 371.11 °C (700) |
| Furnace exit 3 | 371.11 °C (700) |
| Die | 276.67-285.56 °C (530 546) |

| *Extrusion Conditions* | |
|---|---|
| Air pressure | 0.21 bar (3.0 psi) |
| Melt pressure after pump | 6.82-7.79 bar (99 - 113 psi) |

| *Take Up Conditions* | |
|---|---|
| Throughput | 0.3 g/hole/min |
| | 0.5 g/hole/min |
| Basis weight | 36 g/m² |
| Collector speed | 6.1 m/min (20 ft/min) |
| Collector distance | 30.48 cm (12 inches) |

**Table 2 - Physical Properties of Nonwovens**

| Example | Filament Diameter (µm) | | | IhV (before/after) | Tg/Tm (°C) (sulfopoly. / PP) |
|---|---|---|---|---|---|
| | Minimum | Maximum | Average | | |
| 1 | 5 | 18 | 8.7 | 0.29/0.26 | 39/ not applicable |
| 2 | 3 | 11 | 7.7 | 0.40/0.34 | 36/ not applicable |
| CE 1 | 2 | 20 | 8 | Not measured | 36/163 |
| CE 2 | 4 | 10 | 7 | Not measured | 36/164 |
| CE 3 | 4 | 11 | 6 | Not measured | 35/161 |

**Table 3 - Dispersability of Nonwovens**

| Example | Water Temperature (°C) | Initial Disintegration (minutes) | Significant Disintegration (minutes) | Complete Dispersion (minutes) |
|---|---|---|---|---|
| 1 | 23 | <0.25 | 1 | 2 |
| | 50 | <0.17 | 0.5 | 1 |
| | 23 | 8 | 14 | 19 |
| 2 | 50 | <0.5 | 5 | 8 |
| | 80 | <0.5 | 2 | 5 |
| CE 1 | 23 | 0.5 | >15 | No dispersion of PP |
| | 50 | 0.5 | >15 | No dispersion of PP |
| CE 2 | 23 | 0.5 | >15 | No dispersion of PP |
| | 50 | 0.5 | >15 | No dispersion of PP |
| CE 3 | 23 | <0.5 | 6 | No dispersion of PP |
| | 50 | <0.5 | 4 | No dispersion of PP |

### Example 2 (Reference)

A sulfopolyester containing 89 mole%, isophthalic acid, 11 mole% of sodiosulfoisophthalic acid, 72 mole% diethylene glycol, and 28 mole% ethylene glycol with an Ih.V. of 0.4 and a Tg of 35°C was meltblown through a 15.24 cm (6-inch) die using conditions similar to those in Table 1. A soft, handleable, flexible web was obtained that did not block during a roll winding operation. Physical properties are provided in Table 2. A small piece (1" x 2") of the nonwoven fabric was easily and completely dispersed at 50°C and 80°C; at RT (23°C), the fabric required a longer period of time for complete dispersion as shown by the data in Table 3.

It was found that the compositions in Examples 1 and 2 can be overblown onto other nonwoven substrates. It is also possible to condense and wrap shaped or contoured forms that are used instead of conventional web collectors. Thus, it is possible to obtain circular "roving" or plug forms of the webs.

### Comparative Examples 1-3

Pellets of a sulfopolyester containing 89 mole%, isophthalic acid, 11 mole% of sodiosulfoisophthalic acid, 72 mole% diethylene glycol, and 28 mole% ethylene glycol with an Ih.V. of 0.4 and a Tg of 35°C were combined with polypropylene (Basell PF 008) pellets in bicomponent ratios (by wt%) of:
75 PP : 25 sulfopolyester (Example 3)
50 PP : 50 sulfopolyester (Example 4)
25 PP : 75 sulfopolyester (Example 5)

The PP had a MFR (melt flow rate) of 800. A melt blowing operation was performed on a line equipped with a 60.96 cm (24-inch) wide die to yield handleable, soft, flexible, but nonblocking webs with the physical properties provided in Table 2. Small pieces (1" x 4") of nonwoven fabric readily disintegrated as reported in Table 3. None of the fibers, however, were completely water-dispersible because of the insoluble polypropylene component.

### Example 3 (Reference)

A circular piece (4" diameter) of the nonwoven produced in Example 2 was used as an adhesive layer between two sheets of cotton fabric. A Hannifin melt press was used to fuse the two sheets of cotton together by applying a pressure 2.41 bar (35 psig) at 200°C for 30 seconds. The resultant assembly had exceptionally strong bond strength. The cotton substrate shredded before adhesive or bond failure. Similar results have also been obtained with other cellulosics and with PET polyester substrates. Strong bonds were also produced by ultrasonic bonding techniques.

### Comparative Example 4

A PP (Exxon 3356G) with a 1200 MFR was melt blown using a 24" die to yield a flexible nonwoven fabric that did not block and was easily unwound from a roll. Small pieces (1" x 4") did not show any response (i.e., no disintegration or loss in basis weight) to water when immersed in water at RT or 50°C for 15 minutes.

### Example 4

Unicomponent fibers of a sulfopolyester containing 82 mole% isophthalic acid, 18 mole% of sodiosulfoisophthalic acid, 54 mole% diethylene glycol, and 46 mole% 1,4-cyclohexanedimethanol with a Tg of 55°C were melt spun at melt temperatures of 245°C (473°F) on a lab staple spinning line. As spun filament tex was approximately 8.88 dtex (As-spun denier was approximately 8 d/f). Some blocking was encountered on the take-up tubes, but the 10-filament strand readily dissolved within 10 - 19 seconds in unagitated, demineralized water at 82°C and a pH between 5 and 6.

### Example 5

Unicomponent fibers obtained from a blend (75:25) of a sulfopolyester containing 82 mole% isophthalic acid, 18 mole% of sodiosulfoisophthalic acid, 54 mole% diethylene glycol, and 46 mole% 1,4-cyclohexanedimethanol (Tg of 55°C) and a sulfopolyester containing 91 mole% isophthalic acid, 9 mole% of sodiosulfoisophthalic acid, 25 mole% diethylene glycol, and 75 mole% 1,4-cyclohexanedimethanol (Tg of 65°C), respectively, were melt spun on a lab staple spinning line. The blend has a Tg of 57°C as calculated by taking a weighted average of the Tg's of the component sulfopolyesters. The 10-filament strands did not show any blocking on the take-up tubes, but readily dissolved within 20 - 43 seconds in unagitated, demineralized water at 82° C and a pH between 5 and 6.

### Example 6 (Reference)

The blend described in Example 5 was co-spun with PET to yield bicomponent islands-in-the-sea fibers. A configuration was obtained where the sulfopolyester "sea" is 20 wt% of the fiber containing 80 wt% of PET "islands". The spun yarn elongation was 190% immediately after spinning. Blocking was not encountered as the yarn was satisfactorily unwound from the bobbins and processed a week after spinning. In a subsequent operation, the "sea" was dissolved by passing the yarn through an 88°C soft water bath leaving only fine PET filaments.

### Example 7 (Reference)

This prophetic example illustrates the possible application of the multicomponent and microdenier fibers as described herein to the preparation of specialty papers. The blend described in Example 5 is co-spun with PET to yield bicomponent islands-in-the-sea fibers. The fiber contains approximately 35 wt% sulfopolyester "sea" component and approximately 65 wt% of PET "islands". The uncrimped fiber is cut to 0.3175 cm (1/8 inch) lengths. In simulated papermaking, these short-cut bicomponent fibers are added to the refining operation. The sulfopolyester "sea" is removed in the agitated, aqueous slurry thereby releasing the microdenier PET fibers into the mix. At comparable weights, the microdenier PET fibers ("islands") are more effective to increase paper tensile strength than the addition of coarse PET fibers.

### Comparative Example 8

Bicomponent fibers were made having a 108 islands in the sea structure on a spunbond line using a 24" wide bicomponent spinneret die from Hills Inc., Melbourne, FL, having a total of 2222 die holes in the die plate. Two extruders were connected to melt pumps which were in turn connected to the inlets for both components in the fiber spin die. The primary extruder (A) was connected to the inlet which metered a flow of Eastman F61HC PET polyester to form the island domains in the islands in the sea fiber cross-section structure. The extrusion zones were set to melt the PET entering the die at a temperature of 285°C. The secondary extruder (B) processed Eastman AQ 55S sulfopolyester polymer from Eastman Chemical Company, Kingsport, TN having an inherent viscosity of about 0.35 and a melt viscosity of about 1500 Pa·s (15,000 poise), measured at 240°C and 1 rad/sec sheer rate and 970 Pa·s (9,700 poise) measured at 240°C and 100 rad/sec sheer rate in a Rheometric Dynamic Analyzer RDAII (Rheometrics Inc. Piscataway, New Jersey) rheometer. Prior to performing a melt viscosity measurement, the sample was dried for two days in a vacuum oven at 60°C. The viscosity test was performed using a 25 mm diameter parallel-plate geometry at 1mm gap setting. A dynamic frequency sweep was run at a strain rate range of 1 to 400 rad/sec and 10% strain amplitude. Then, the viscosity was measured at 240° C and strain rate of 1 rad/sec. This procedure was followed in determining the viscosity of the sulfopolyester materials used in the subsequent examples. The secondary extruder was set to melt and feed the AQ 55S polymer at a melt temperature of 255°C to the spinnerette die. The two polymers were formed into bicomponent extrudates by extrusion at a throughput rate of 0.6 g/hole/min. The volume ratio of PET to AQ 55S in the bicomponent extrudates was adjusted to yield 60/40 and 70/30 ratios.

An aspirator device was used to melt draw the bicomponent extrudates to produce the bicomponent fibers. The flow of air through the aspirator chamber pulled the resultant fibers down. The amount of air flowing downward through the aspirator assembly was controlled by the pressure of the air entering the aspirator. In this example, the maximum pressure of the air used in the aspirator to melt draw the bicomponent extrudates was 1.72 bar (25 psi). Above this value, the airflow through the aspirator caused the extrudates to break during this melt draw spinning process as the melt draw rate imposed on the bicomponent extrudates was greater than the inherent ductility of the bicomponent extrudates. The bicomponent fibers were laid down into a non-woven web having a fabric weight of 95 grams per square meter (gsm). Evaluation of the bicomponent fibers in this nonwoven web by optical microscopy showed that the PET was present as islands in the center of the fiber structure, but the PET islands around the outer periphery of the bicomponent fiber nearly coalesced together to form a nearly continuous ring of PET polymer around the circumference of the fibers which is not desireable. Microscopy found that the diameter of the bicomponent fibers in the nonwoven web was generally between 15-19 microns, corresponding to an average fiber as spun filament tex of 2.78 dtex (as-spun denier of about 2.5 denier per filament (dpf)). This represents a melt drawn fiber speed of about 2160 meters per minute. As-spun denier is defined as the denier of the fiber (weight in grams of 9000 meters length of fiber) obtained by the melt extrusion and melt drawing steps. The variation in bicomponent fiber diameter indicated non-uniformity in spun-drawing of the fibers.

The non-woven web samples were conditioned in a forced-air oven for five minutes at 120°C. The heat treated web exhibited significant shrinkage with the area of the nonwoven web being decreased to only 12% of the initial area of the web before heating. Although not intending to be bound by theory, due to the high molecular weight and melt viscosity of the AQ 55S sulfopolyester used in the fiber, the bicomponent extrudates could not be melt drawn to the degree required to cause strain induced crystallization of the PET segments in the fibers. Overall, the AQ 55S sulfopolyester having this specific inherent viscosity and melt viscosity was not acceptable as the bicomponent extrudates could not be uniformly melt drawn to the desired fine denier.

### Example 8

A sulfopolyester polymer with the same chemical composition as commercial Eastman AQ55S polymer was produced, however, the molecular weight was controlled to a lower value characterized by an inherent viscosity of about 0.25. The melt viscosity of this polymer was 330 Pa·s (3300 poise) measured at 240°C and 1 rad/sec shear rate.

### Example 9 (Reference)

Bicomponent extrudates having a 16-segment segmented pie structure were made using a bicomponent spinneret die from Hills Inc., Melbourne, FL, having a total of 2222 die holes in the 60.96 cm (24 inch) wide die plate on a spunbond equipment. Two extruders were used to melt and feed two polymers to this spinnerette die. The primary extruder (A) was connected to the inlet which fed Eastman F61HC PET polyester melt to form the domains or segment slices in the segmented pie cross-section structure. The extrusion zones were set to melt the PET entering the spinnerette die at a temperature of 285°C. The secondary extruder (B) melted and fed the sulfopolyester polymer of Example 8. The secondary extruder was set to extrude the sulfopolyester polymer at a melt temperature of 255°C into the spinnerette die. Except for the spinnerette die used and melt viscosity of the sulfopolyester polymer, the procedure employed in this example was the same as in Comparative Example 8. The melt throughput per hole was 0.6 gm/min. The volume ratio of PET to sulfopolyester in the bicomponent extrudates was set at 70/30 which represents a weight ratio of about 70/30.

The bicomponent extrudates were melt drawn using the same aspirator used in Comparative Example 8 to produce the bicomponent fibers. Initially, the input air to the aspirator was set to 1.72 bar (25 psi) and the fibers had as-spun denier of about 2.0 with the bicomponent fibers having a uniform diameter profile of about 14-15 microns. The air to the aspirator was increased to a maximum available pressure of 3.10 bar (45 psi) without breaking the melt extrudates during melt drawing. Using 3.10 bar (45 psi air), the bicomponent extrudates were melt drawn down to a fiber as spun filament tex of 1.33 dtex (as-spun denier of about 1.2) with the bicomponent fibers having a diameter of 11-12 microns when viewed under a microscope. The speed during the melt draw process was calculated to be about 4500 m/min. Although not intending to be bound by theory, at melt draw rates approaching this speed, it is believed that strain induced crystallization of the PET during the melt drawing process begins to occur. As noted above, it is desirable to form some oriented crystallinity in the PET fiber segments during the fiber melt draw process so that the nonwoven web will be more dimensionally stable during subsequent processing.

The bicomponent fibers using 3.1 bar (45 psi) aspirator air pressure were laid down into a nonwoven web with a weight of 140 grams per square meter (gsm). The shrinkage of the nonwoven web was measured by conditioning the material in a forced-air oven for five minutes at 120°C. This example represents a significant reduction in shrinkage compared to the fibers and fabric of Comparative Example 8.

This nonwoven web having 140 gsm fabric weight was soaked for five minutes in a static deionized water bath at various temperatures. The soaked nonwoven web was dried, and the percent weight loss due to soaking in deionized water at the various temperatures was measured as shown in Table 4.

**Table 4**

| Soaking Temperature | 25°C | 33°C | 40°C | 72°C |
|---|---|---|---|---|
| Nonwoven Web Weight Loss (%) | 3.3 | 21.7 | 31.4 | 31.7 |

The sulfopolyester dissipated very readily into deionized water at a temperature of about 25°C. Removal of the sulfopolyester from the bicomponent fibers in the nonwoven web is indicated by the % weight loss. Extensive or complete removal of the sulfopolyester from the bicomponent fibers were observed at temperatures at or above 33°C. If hydroentanglement is used to produce a nonwoven web of these bicomponent fibers comprising the present sulfopolyester polymer of Example 8, it would be expected that the sulfopolyester polymer would be extensively or completely removed by the hydroentangling water jets if the water temperature was above ambient. If it is desired that very little sulfopolyester polymer be removed from these bicomponent fibers during the hydroentanglement step, low water temperature, less than 25°C , should be used.

### Example 10

A sulfopolyester polymer was prepared with the following diacid and diol composition: diacid composition (71 mol % terephthalic acid, 20 mol % isophthalic acid, and 9 mol % 5-(sodiosulfo) isophthalic acid) and diol composition (60 mol % ethylene glycol and 40 mol % diethylene glycol). The sulfopolyester was prepared by high temperature polyesterification under vacuum. The esterification conditions were controlled to produce a sulfopolyester having an inherent viscosity of about 0.31. The melt viscosity of this sulfopolyester was measured to be in the range of 300-400 Pa·s(3000-4000 poise) at 240°C and 1 rad/sec shear rate.

### Example 11 (Reference)

The sulfopolyester polymer of Example 10 was spun into bicomponent segmented pie fibers and nonwoven web according to the same procedure described in Example 9. The primary extruder (A) fed Eastman F61HC PET polyester melt to form the larger segment slices in the segmented pie structure. The extrusion zones were set to melt the PET entering the spinnerette die at a temperature of 285°C. The secondary extruder (B) processed the sulfopolyester polymer of Example 10 which was fed at a melt temperature of 255°C into the spinnerette die. The melt throughput rate per hole was 0.6 gm/min. The volume ratio of PET to sulfopolyester in the bicomponent extrudates was set at 70/30 which represents the weight ratio of 70/30. The cross-section of the bicomponent extrudates had wedge shaped domains of PET with sulfopolyester polymer separating these domains.

The bicomponent extrudates were melt drawn using the same aspirator assembly used in Comparative Example 8 to produce the bicomponent fiber. The maximum available pressure of the air to the aspirator without breaking the bicomponent fibers during drawing was 3.10 bar (45 psi). Using 3.10 bar (45 psi air), the bicomponent extrudates were melt drawn down to bicomponent fibers with as-spun denier of about 1.33 dtex (1.2) with the bicomponent fibers having a diameter of about 11-12 microns when viewed under a microscope. The speed during the melt drawing process was calculated to be about 4500 m/min.

The bicomponent fibers were laid down into nonwoven webs having weights of 140 gsm and 110 gsm. The shrinkage of the webs was measured by conditioning the material in a forced-air oven for five minutes at 120°C. The area of the nonwoven webs after shrinkage was about 29% of the webs' starting areas.

Microscopic examination of the cross section of the melt drawn fibers and fibers taken from the nonwoven web displayed a very good segmented pie structure where the individual segments were clearly defined and had similar size and shape. The PET segments were completely separated from each other so that they would form eight separate PET monocomponent fibers having a pie-slice shape after removal of the sulfopolyester from the bicomponent fiber.

The nonwoven web, having 110 gsm fabric weight, was soaked for eight minutes in a static deionized water bath at various temperatures. The soaked nonwoven web was dried and the percent weight loss due to soaking in deionized water at the various temperatures was measured as shown in Table 5.

**Table 5**

| Soaking Temperature | 36°C | 41°C | 46°C | 51°C | 56°C | 72°C |
|---|---|---|---|---|---|---|
| Nonwoven Web Weight Loss (%) | 1.1 | 2.2 | 14.4 | 25.9 | 28.5 | 30.5 |

The sulfopolyester polymer dissipated very readily into deionized water at temperatures above 46°C, with the removal of the sulfopolyester polymer from the fibers being very extensive or complete at temperatures above 51°C as shown by the weight loss. A weight loss of about 30% represented complete removal of the sulfopolyester from the bicomponent fibers in the nonwoven web. If hydroentanglement is used to process this non-woven web of bicomponent fibers comprising this sulfopolyester, it would be expected that the polymer would not be extensively removed by the hydroentangling water jets at water temperatures below 40°C.

### Example 12 (Reference)

The nonwoven webs of Example 11 having basis weights of both 140 gsm and 110 gsm were hydroentangled using a hydroentangling apparatus manufactured by Fleissner, GmbH, Egelsbach, Germany. The machine had five total hydroentangling stations wherein three sets of jets contacted the top side of the nonwoven web and two sets of jets contacted the opposite side of the nonwoven web. The water jets comprised a series of fine orifices about 100 microns in diameter machined in two-feet wide jet strips. The water pressure to the jets was set at 60 bar (Jet Strip # 1), 190 bar (Jet Strips # 2 and 3), and 230 bar (Jet Strips # 4 and 5). During the hydroentanglement process, the temperature of the water to the jets was found to be in the range of about 40-45°C. The nonwoven fabric exiting the hydroentangling unit was strongly tied together. The continuous fibers were knotted together to produce a hydroentangled nonwoven fabric with high resistance to tearing when stretched in both directions.

Next, the hydroentangled nonwoven fabric was fastened onto a tenter frame comprising a rigid rectangular frame with a series of pins around the periphery thereof. The fabric was fastened to the pins to restrain the fabric from shrinking as it was heated. The frame with the fabric sample was placed in a forced-air oven for three minutes at 130°C to cause the fabric to heat set while being restrained. After heat setting, the conditioned fabric was cut into a sample specimen of measured size, and the specimen was conditioned at 130°C without restraint by a tenter frame. The dimensions of the hydroentangled nonwoven fabric after this conditioning were measured and only minimal shrinkage (<0.5% reduction in dimension) was observed. It was apparent that heat setting of the hydroentangled nonwoven fabric was sufficient to produce a dimensionally stable nonwoven fabric.

The hydroentangled nonwoven fabric, after being heat set as described above, was washed in 90°C deionized water to remove the sulfopolyester polymer and leave the PET monocomponent fiber segments remaining in the hydroentangled fabric. After repeated washings, the dried fabric had a weight loss of approximately 26 %. Washing the nonwoven web before hydroentangling demonstrated a weight loss of 31.3 %. Therefore, the hydroentangling process removed some of the sulfopolyester from the nonwoven web, but this amount was relatively small. In order to lessen the amount of sulfopolyester removed during hydroentanglement, the water temperature of the hydroentanglement jets should be lowered to below 40°C.

The sulfopolyester of Example 10 was found to give segmented pie fibers having good segment distribution where the water non-dispersable polymer segments formed individual fibers of similar size and shape after removal of the sulfopolyester polymer. The rheology of the sulfopolyester was suitable to allow the bicomponent extrudates to be melt drawn at high rates to achieve fine denier bicomponent fibers with as spun filament tex as low as 1.11 dtex (as-spun denier as low as 1.0). These bicomponent fibers are capable of being laid down into a non-woven web which could be hydroentangled without experiencing significant loss of sulfopolyester polymer to produce the nonwoven fabric. The nonwoven fabric produced by hydroentangling the non-woven web had high strength and could be heat set at temperatures of about 120°C or higher to produce nonwoven fabric with excellent dimensional stability. The sulfopolyester polymer was removed from the hydroentangled nonwoven fabric in a washing step. This resulted in a strong nonwoven fabric product with lighter fabric weight and much greater flexibility and softer hand. The monocomponent PET fibers in this nonwoven fabric product were wedge shaped and had an average dtex of 0.11 dtex (denier of about 0.1).

### Example 13

A sulfopolyester polymer was prepared with the following diacid and diol composition: diacid composition (69 mol % terephthalic acid, 22.5 mol % isophthalic acid, and 8.5 mol % 5-(sodiosulfo) isophthalic acid) and diol composition (65 mol % ethylene glycol and 35 mol % diethylene glycol). The sulfopolyester was prepared by high temperature polyesterification under vacuum. The esterification conditions were controlled to produce a sulfopolyester having an inherent viscosity of about 0.33. The melt viscosity of this sulfopolyester was measured to be in the range of 300-400 Pa·s (3000-4000 poise) at 240°C and 1 rad/sec shear rate.

### Example 14 (Reference)

The sulfopolyester polymer of Example 13 was spun into bicomponent islands-in-sea cross-section configuration with 16 islands on a spunbond line. The primary extruder (A) fed Eastman F61HC PET polyester melt to form the islands in the islands-in-sea structure. The extrusion zones were set to melt the PET entering the spinnerette die at a temperature of about 290°C. The secondary extruder (B) processed the sulfopolyester polymer of Example 13 which was fed at a melt temperature of about 260°C into the spinnerette die. The volume ratio of PET to sulfopolyester in the bicomponent extrudates was set at 70/30 which represents the weight ratio of 70/30. The melt throughput rate through the spinneret was 0.6 g/hole/minute. The cross-section of the bicomponent extrudates had round shaped island domains of PET with sulfopolyester polymer separating these domains.

The bicomponent extrudates were melt drawn using an aspirator assembly. The maximum available pressure of the air to the aspirator without breaking the bicomponent fibers during melt drawing was 3.44 bar (50 psi). Using 3.44 bar (50 psi) air, the bicomponent extrudates were melt drawn down to bicomponent fibers with as spun filament tex of 1.55 dtex (as-spun denier of about 1.4) with the bicomponent fibers having a diameter of about 12 microns when viewed under a microscope. The speed during the drawing process was calculated to be about 3900 m/min.

## Claims

1. A water dispersible sulfopolyester comprising less than 25 mole % of residues of at least one sulfomonomer, based on the total moles of diacid or diol residues; wherein said sulfopolyester has a glass transition temperature (Tg) of at least 40°C, measured using differential scanning calorimetry, and a melt viscosity of less than 1200 Pa·s (12,000 poise) measured at 240°C at a strain rate of 1 rad/sec.

2. The water dispersible sulfopolyester according to Claim 1 where said sulfopolyester comprises less than 15 mole % of residues of at least one sulfomonomer, based on the total moles of diacid or diol residues.

3. The water dispersible sulfopolyester according to Claim 1 wherein said sulfopolyester comprises:
(A) residues of one or more dicarboxylic acids;
(B) 5 to 20 mole % of residues of at least one sulfomonomer having 2 functional groups and one or more sulfonate groups attached to an aromatic or cycloaliphatic ring wherein said functional groups are hydroxyl, carboxyl, or a combination thereof; and
(C) residues of one or more diols.

4. The water dispersible sulfopolyester according to Claim 1 wherein said sulfopolyester comprises:
(A) residues of one or more dicarboxylic acids;
(B) 5 to 20 mole % of residues of at least one sulfomonomer having 2 functional groups and one or more sulfonate groups attached to an aromatic or cycloaliphatic ring wherein said functional groups are hydroxyl, carboxyl, or a combination thereof; ,
(C) one or more diol residues wherein at least 5 mole %, based on the total diol residues, is a poly(ethylene glycol) having a structure
H-(OCH₂-CH₂)ₙ-OH
wherein n is an integer in the range of 2 to 500; and
(D) 0 to 25 mole %, based on the total repeating units, of residues of at least one branching monomer having 3 or more functional groups wherein said functional groups are hydroxyl, carboxyl, or a combination thereof.

5. The water dispersible sulfopolyester according to Claims 3 or 4 wherein said dicarboxylic acids are selected from the group consisting of aliphatic diacids, cycloaliphatic dicarboxylic acids, aromatic dicarboxylic acids, and combinations thereof.

6. The water dispersible sulfopolyester according to Claim 5 wherein said dicarboxylic acids are selected from the group consisting of succinic, glutaric, adipic, azelaic, sebacic, fumaric, maleic, itaconic, 1,3-cyclohexane dicarboxylic, 1,4-cyclohexanedicarboxylic, diglycolic, 2,5-norbornanedicarboxylic, phthalic, terephthalic, 1,4-naphthalenedicarboxylic, 2,5-naphthalenedicarboxylic, 2,6-naphthalenedicarboxylic, 2,7-naphthalenedicarboxylic, diphenic, 4,4'-oxydibenzoic, 4,4'-sulfonyldibenzoic, isophthalic, and combinations thereof.

7. The water dispersible sulfopolyester according to Claim 1 in wherein said sulfomonomer is a metal sulfonate salt of a sulfophthalic acid, sulfoterephthalic acid, sulfoisophthalic acid, or combinations thereof.

8. The water dispersible sulfopolyester according to Claims 3 or 4 wherein said diol residues are selected from the group consisting of ethylene glycol, diethylene glycol, triethylene glycol, poly(ethylene) glycols, 1,3-propanediol, 2,4-dimethyl-2-ethylhexane-1,3-diol, 2,2-dimethyl-1,3-propanediol, 2-ethyl-2-butyl-1,3-propanediol, 2-ethyl-2-isobutyl-1,3-propanediol, 1,3-butanediol, 1,4-butanediol, 1,5-pentanediol, 1,6-hexanediol, 2,2,4-trimethyl-1,6-hexanediol, thiodiethanol, 1,2-cyclohexanedimethanol, 1,3-cyclohexanedimethanol, 1,4-cyclohexanedimethanol, 2,2,4,4-tetramethyl-1,3-cyclobutanediol, p-xylylenediol, and combinations thereof.

9. A multicomponent fiber having a sheath core configuration, said multicomponent fiber comprising:
(A) a sheath component comprising at least one water dispersible sulfopolyester according to claim 1 and
(B) a core component comprising at least one water non-dispersible polymer immiscible with said sulfopolyester;
wherein said fiber has an as-spun filament tex of less than 6.67 dtex (as spun denier of less than 6 denier per filament).

10. A multicomponent fiber having a sheath core configuration according to Claim 9 wherein said water dispersible sulfopolyester has a melt viscosity of less than 600 Pa·s (6000 poise) measured at 240°C at a strain rate of 1 rad/sec.

11. The multicomponent fiber having a sheath core configuration according to Claim 9 wherein said multicomponent fiber contains less than 10 weight percent of a pigment or filler, based on the total weight of said multicomponent fiber.

12. The multicomponent fiber having a sheath core configuration according to Claim 9 wherein said water non-dispersible polymer is selected from the group consisting of polyolefins, polyesters, polyamides, polylactides, polycaprolactones, polycarbonates, polyurethanes, polyvinyl chlorides, cellulose esters, and combinations thereof.

13. The multicomponent fiber having a sheath core configuration according to Claim 9 wherein said water non-dispersible polymer is biodistintegratable as determined by DIN Standard 54900 or biodegradable as determined by ASTM Standard Method, D6340-98.

14. The multicomponent fiber having a sheath core configuration according to Claim 12 wherein said water non-dispersible polymer is an aliphatic-aromatic polyester.

15. A fibrous article comprising the multicomponent fiber according to Claim 9.

16. The fibrous article of Claim 15 wherein said fibrous article is selected from the group consisting of yarns, multifilament fabrics, cords, fabrics, melt blown webs, spunbonded webs, thermobonded webs, hydroentangled webs, non-woven webs or fabrics, and combinations thereof.

17. The fibrous articles of Claim 16 wherein said fibrous article comprises one or more layers of water-dispersible fibers, multicomponent fibers, or microdenier fibers.

18. The fibrous article of Claim 16 wherein said article is selected from the group consisting of personal care products, health care products, feminine care products, wipes, fiber-containing cleaning products, medical and surgical care products, tapes, protective barriers, inserts for various personal hygiene and cleaning products, and packaging materials.

19. The fibrous article of Claim 18 wherein said personal care, health care, feminine care, and medical and surgical care products are selected from the group consisting of infant diapers, child training pants, adult diapers, adult incontinence pads, feminine napkins, panty liners, tampons, medical wipes, tissues, gauzes, examination bed coverings, surgical masks, gowns, bandages, wound dressings, and tapes.

20. The fibrous article of Claim 15 wherein said fibrous article is pre-moistened with various liquid compositions and used to deliver said compositions to a surface.

21. The fibrous article of Claim 20 wherein said liquid compositions are selected from the group consisting of detergents, wetting agents, cleaning agents, skin care products, cosmetics, ointments, medications, emollients, and fragrances.

22. The fibrous article of Claim 15 wherein said fibrous article further comprises at least one powder or particulate.

23. The fibrous article of Claim 22 wherein said powder or particulate is selected from the group consisting of talcs, starches, various water absorbents, water-dispersible, water swellable polymers, silicas, pigments, and microcapsules.

24. A process for making at least one multicomponent fiber having a sheath core configuration comprising:
spinning at least one water dispersible sulfopolyester according to claim 1 and at least one water non-dispersible polymer immiscible with said sulfopolyester to produce said multicomponent fiber, wherein said multicomponent fiber comprises a core component and a sheath component; wherein said core component comprises said water non-dispersible polymer; wherein said sheath component comprises said water dispersible sulfopolyester; and wherein said multicomponent fiber has an as-spun filament tex of less than 6.67 dtex (as spun denier of less than 6 denier per filament).

## Patentansprüche

1. In Wasser dispergierbarer Sulfopolyester, umfassend weniger als 25 Mol-% von Resten von mindestens einem Sulfomonomer, basierend auf der Gesamtmolzahl von Disäure- oder Diol-Resten; wobei der Sulfopolyester eine Glasübergangstemperatur (Tg) von mindestens 40 °C, gemessen unter Anwendung von Differentialscanningkalorimetrie, und eine Schmelzviskosität von weniger als 1200 Pa·s (12.000 Poise), gemessen bei 240 °C bei einer Formänderungsgeschwindigkeit von 1 Rad/s, hat.

2. In Wasser dispergierbarer Sulfopolyester nach Anspruch 1, wobei der Sulfopolyester weniger als 15 Mol-% von Resten von mindestens einem Sulfomonomer, basierend auf der Gesamtmolzahl von Disäure- oder Diol-Resten, umfasst.

3. In Wasser dispergierbarer Sulfopolyester nach Anspruch 1, wobei der Sulfopolyester umfasst:
(A) Reste von einer oder mehreren Dicarbonsäuren;
(B) 5 bis 20 Mol-% von Resten von zumindest einem Sulfomonomer mit 2 funktionellen Gruppen und einer oder mehreren Sulfonatgruppen, die an einen aromatischen oder cycloaliphatischen Ring gebunden sind, wobei die funktionellen Gruppen Hydroxyl, Carboxyl oder eine Kombination davon sind; und
(C) Reste von einem oder mehreren Diolen.

4. In Wasser dispergierbarer Sulfopolyester nach Anspruch 1, wobei der Sulfopolyester umfasst:
(A) Reste von einer oder mehreren Dicarbonsäuren;
(B) 5 bis 20 Mol-% von Resten von zumindest einem Sulfomonomer mit 2 funktionellen Gruppen und einer oder mehreren Sulfonatgruppen, die an einen aromatischen oder cycloaliphatischen Ring gebunden sind, wobei die funktionellen Gruppen Hydroxyl, Carboxyl oder eine Kombination davon sind;
(C) einen oder mehrere Diolreste, wobei zumindest 5 Mol-%, basierend auf der Gesamtheit der Diolreste, ein Poly(ethylenglycol) mit der Struktur
H-(OCH₂-CH₂)ₙ-OH ist,
wobei n eine ganze Zahl im Bereich von 2 bis 500 ist; und
(D) 0 bis 25 Mol-%, basierend auf der Gesamtheit der Wiederholungseinheiten, von Resten von zumindest einem Verzweigungsmonomer mit 3 oder mehr funktionellen Gruppen, wobei die funktionellen Gruppen Hydroxyl, Carboxyl oder eine Kombination davon sind.

5. In Wasser dispergierbarer Sulfopolyester nach den Ansprüchen 3 oder 4, wobei die Dicarbonsäuren ausgewählt sind aus der Gruppe, bestehend aus aliphatischen Disäuren, cycloaliphatischen Dicarbonsäuren, aromatischen Dicarbonsäuren und Kombinationen davon.

6. In Wasser dispergierbarer Sulfopolyester nach Anspruch 5, wobei die Dicarbonsäuren ausgewählt sind aus der Gruppe, bestehend aus Bernstein-, Glutar-, Adipin-, Azelain-, Sebacin-, Fumar-, Malein-, Itacon-, 1,3-Cyclohexandicarbon-, 1,4-Cyclohexandicarbon-, Diglycol-, 2,5-Norbornandicarbon-, Phthal-, Terephthal-, 1,4-Naphthalindicarbon-, 2,5-Naphthalindicarbon-, 2,6-Naphthalindicarbon-, 2,7-Naphthalindicarbon-, Diphen-, 4,4'-Oxydibenzoe-, 4,4'-Sulfonyldibenzoe-, Isophthalsäure und Kombinationen davon.

7. In Wasser dispergierbarer Sulfopolyester nach Anspruch 1, wobei das Sulfomonomer ein Metallsulfonatsalz einer Sulfophthalsäure, Sulfoterephthalsäure, Sulfoisophthalsäure oder Kombinationen davon ist.

8. In Wasser dispergierbarer Sulfopolyester nach den Ansprüchen 3 oder 4, wobei die Diolreste aus der Gruppe ausgewählt sind, bestehend aus Ethylenglycol, Diethylenglycol, Triethylenglycol, Poly(ethylen)glycolen, 1,3-Propandiol, 2,4-Dimethyl-2-ethylhexan-1,3-diol, 2,2-Dimethyl-1,3-propandiol, 2-Ethyl-2-butyl-1,3-propandiol, 2-Ethyl-2-isobutyl-1,3-propandiol, 1,3-Butandiol, 1,4-Butandiol, 1,5-Pentandiol, 1,6-Hexandiol, 2,2,4-Trimethyl-1,6-hexandiol, Thiodiethanol, 1,2-Cyclohexandimethanol, 1,3-Cyclohexan-dimethanol, 1,4-Cyclohexandimethanol, 2,2,4,4-Tetramethyl-1,3-cyclobutandiol, p-Xylylendiol und Kombinationen davon.

9. Mehrkomponentenfaser mit einer Hülle-Kern-Konfiguration, wobei die Mehrkomponentenfaser umfasst:
(A) eine Hüllenkomponente, umfassend mindestens einen in Wasser dispergierbaren Sulfopolyester nach Anspruch 1, und
(B) eine Kernkomponente, umfassend mindestens ein nicht in Wasser dispergierbares Polymer, das nicht mit dem Sulfopolyester mischbar ist;
wobei die Faser ein Spinnverfahrens-Filamenttex (as-spun filament tex) von weniger als 6,67 dtex (Spinnverfahrens-Denier (as spun denier) von weniger als 6 Denier per Filament) aufweist.

10. Mehrkomponentenfaser mit einer Hülle-Kern-Konfiguration nach Anspruch 9, wobei der in Wasser dispergierbare Sulfopolyester eine Schmelzviskosität von weniger als 600 Pa·s (6000 Poise), gemessen bei 240 °C bei einer Formänderungsgeschwindigkeit von 1 Rad/s, hat.

11. Mehrkomponentenfaser mit einer Hülle-Kern-Konfiguration nach Anspruch 9, wobei die Mehrkomponentenfaser weniger als 10 Gew.-% eines Pigments oder Füllstoffes, basierend auf dem Gesamtgewicht der Mehrkomponentenfaser, enthält.

12. Mehrkomponentenfaser mit einer Hülle-Kern-Konfiguration nach Anspruch 9, wobei das in Wasser nicht dispergierbare Polymer aus der Gruppe ausgewählt ist, bestehend aus Polyolefinen, Polyestern, Polyamiden, Polylactiden, Polycaprolactonen, Polycarbonaten, Polyurethanen, Polyvinylchloriden, Celluloseestern und Kombinationen davon.

13. Mehrkomponentenfaser mit einer Hülle-Kern-Konfiguration nach Anspruch 9, wobei das in Wasser nicht dispergierbare Polymer biologisch zersetzbar ist, bestimmt nach DIN Standard 54900, oder biologisch abbaubar ist, bestimmt nach ASTM-Standardverfahren, D6340-98.

14. Mehrkomponentenfaser mit einer Hülle-Kern-Konfiguration nach Anspruch 12, wobei das in Wasser nicht dispergierbare Polymer ein aliphatisch-aromatischer Polyester ist.

15. Faserartikel, umfassend die Mehrkomponentenfaser nach Anspruch 9.

16. Faserartikel nach Anspruch 15, wobei der Faserartikel ausgewählt ist aus der Gruppe, bestehend aus Garnen, Multifilamentgeweben, Fäden, Geweben, schmelzgeblasenen Vliesen, Elementarfaservliesen, Thermobondvliesen, wasservernadelten Vliesen, Vliesstoffen oder -geweben und Kombinationen davon.

17. Faserartikel nach Anspruch 16, wobei der Faserartikel eine oder mehrerer Schichten von in Wasser dispergierbaren Fasern, Mehrkomponentenfasern oder Mikrodenierfasern umfasst.

18. Faserartikel nach Anspruch 16, wobei der Artikel ausgewählt ist aus der Gruppe, bestehend aus Körperpflegeprodukten, Produkten für die Gesundheitsfürsorge, Pflegeprodukten für Frauen, Reinigungstüchern, faserhaltigen Reinigungsprodukten, medizinischen und chirurgischen Pflegeprodukten, Pflastern, schützenden Barrieren, Einlagen für verschiedene Körperpflege- und Reinigungsprodukte und Verpackungsmaterialien.

19. Faserartikel nach Anspruch 18, wobei die Körperpflege-, Gesundheitsfürsorge-, Damenpflege- und medizinischen und chirurgischen Pflegeprodukte aus der Gruppe ausgewählt sind, bestehend aus Babywindeln, Kindertrainingshöschen, Windeln für Erwachsene, Inkontinenzeinlagen für Erwachsene, Damenbinden, Slipeinlagen, Tampons, medizinischen Reinigungstüchern, Papiertüchern, Mullen, Abdeckungen für Untersuchungstische, chirurgischen Masken, Kitteln, Bandagen, Wundverbänden und Pflastern.

20. Faserartikel nach Anspruch 15, wobei der Faserartikel mit verschiedenen flüssigen Zusammensetzungen vorbenetzt ist und zur Abgabe der Zusammensetzungen an eine Oberfläche verwendet wird.

21. Faserartikel nach Anspruch 20, wobei die flüssigen Zusammensetzungen aus der Gruppe ausgewählt sind, bestehend aus Detergenzien, Benetzungsmitteln, Reinigungsmitteln, Hautpflegeprodukten, Kosmetika, Salben, Medikationen, lindernden Mitteln und Düften.

22. Faserartikel nach Anspruch 15, wobei der Faserartikel ferner zumindest ein Pulver oder partikulären Stoff umfasst.

23. Faserartikel nach Anspruch 22, wobei das Pulver oder der partikuläre Stoff aus der Gruppe ausgewählt ist, bestehend aus Talk, Stärken, verschiedenen Wasserabsorptionsmitteln, in Wasser dispergierbaren oder in Wasser quellbaren Polymeren, Siliciumdioxid, Pigmenten und Mikrokapseln.

24. Verfahren zur Herstellung mindestens einer Mehrkomponentenfaser mit einer Hülle-Kern-Konfiguration, umfassend:
das Verspinnen zumindest eines in Wasser dispergierbaren Sulfopolyesters nach Anspruch 1 und zumindest eines in Wasser nicht dispergierbaren Polymers, das mit dem Sulfopolyester nicht mischbar ist, zur Herstellung der Mehrkomponentenfaser, wobei die Mehrkomponentenfaser eine Kernkomponente und eine Hüllenkomponente umfasst, wobei die Kernkomponente das in Wasser nicht dispergierbare Polymer umfasst, wobei die Hüllenkomponente den in Wasser dispergierbaren Sulfopolyester umfasst; und wobei die Mehrkomponentenfaser ein Spinnverfahrens-Filamenttex (as-spun filament tex) von weniger als 6,67 dtex (Spinnverfahrens-Denier (as spun denier) von weniger als 6 Denier per Filament) aufweist.

## Revendications

1. Sulfopolyester dispersible dans l'eau comprenant moins de 25 % molaires de résidus d'au moins un sulfomonomère, sur la base du nombre total de moles de résidus diacide ou diol ; dans lequel ledit sulfopolyester a une température de transition vitreuse (Tg) d'au moins 40 °C, mesurée en utilisant une calorimétrie différentielle à balayage, et une viscosité à l'état fondu inférieure à 1200 Pa·s (12 000 poises) mesurée à 240 °C à un taux de déformation de 1 rad/s.

2. Sulfopolyester dispersible dans l'eau selon la revendication 1, où ledit sulfopolyester comprend moins de 15 % molaires de résidus d'au moins un sulfomonomère, sur base du nombre total de moles de résidus diacide ou diol.

3. Sulfopolyester dispersible dans l'eau selon la revendication 1, dans lequel ledit sulfopolyester comprend :
(A) des résidus d'un ou plusieurs acides dicarboxyliques ;
(B) 5 à 20 % molaires de résidus d'au moins un sulfomonomère possédant 2 groupes fonctionnels et un ou plusieurs groupes sulfonate fixés à un cycle aromatique ou cyclo-aliphatique dans lequel lesdits groupes fonctionnels sont hydroxyle, carboxyle, ou une combinaison de ceux-ci ; et
(C) des résidus d'un ou plusieurs diols.

4. Sulfopolyester dispersible dans l'eau selon la revendication 1, dans lequel ledit sulfopolyester comprend :
(A) des résidus d'un ou plusieurs acides dicarboxyliques ;
(B) 5 à 20 % molaires de résidus d'au moins un sulfomonomère possédant 2 groupes fonctionnels et un ou plusieurs groupes sulfonate fixés à un cycle aromatique ou cyclo-aliphatique dans lequel lesdits groupes fonctionnels sont hydroxyle, carboxyle, ou une combinaison de ceux-ci ;
(C) un ou plusieurs résidus diol, dans lequel au moins 5 % molaires, sur la base du nombre total de résidus diol, est un poly(éthylène glycol) ayant une structure
H-(OCH₂-CH₂)ₙ-OH
dans laquelle n est un nombre entier dans la plage de 2 à 500 ; et
(D) 0 à 25 % molaires, sur la base du nombre total de motifs de répétition, de résidus d'au moins un monomère de ramification possédant 3 groupes fonctionnels ou plus, dans lequel lesdits groupes fonctionnels sont hydroxyle, carboxyle, ou une combinaison de ceux-ci.

5. Sulfopolyester dispersible dans l'eau selon les revendications 3 ou 4, dans lequel lesdits acides dicarboxyliques sont choisis dans le groupe constitué de diacides aliphatiques, acides dicarboxyliques cyclo-aliphatiques, acides dicarboxyliques aromatiques, et des combinaisons de ceux-ci.

6. Sulfopolyester dispersible dans l'eau selon la revendication 5, dans lequel lesdits acides dicarboxyliques sont choisis dans le groupe constitué de succinique, glutarique, adipique, azélaïque, sébacique, fumarique, maléique, itaconique, 1,3-cyclohexanedicarboxylique, 1,4-cyclohexanedicarboxylique, diglycolique, 2,5-norbornanedicarboxylique, phtalique, téréphtalique, 1,4-naphtalènedicarboxylique, 2,5-naphtalènedicarboxylique, 2,6-naphtalènedicarboxylique, 2,7-naphtalènedicarboxylique, diphénique, 4,4'-oxydibenzoïque, 4,4'-sulfonyldibenzoïque, isophtalique, et des combinaisons de ceux-ci.

7. Sulfopolyester dispersible dans l'eau selon la revendication 1, dans lequel ledit sulfomonomère est un sel sulfonate de métal d'un acide sulfophtalique, un acide sulfotéréphtalique, un acide sulfo-isophtalique, ou des combinaisons de ceux-ci.

8. Sulfopolyester dispersible dans l'eau selon les revendications 3 ou 4, dans lequel lesdits résidus diol sont choisis dans le groupe constitué d'éthylène glycol, diéthylène glycol, triéthylène glycol, poly(éthylène) glycols, 1,3-propanediol, 2,4-diméthyl-2-éthylhexane-1,3-diol, 2,2-diméthyl-1,3-propanediol, 2-éthyl-2-butyl-1,3-propanediol, 2-éthyl-2-isobutyl-1,3-propanediol, 1,3-butanediol, 1,4-butanediol, 1,5-pentanediol, 1,6-hexanediol, 2,2,4-triméthyl-1,6-hexanediol, thiodiéthanol, 1,2-cyclohexanediméthanol, 1,3-cyclohexane-diméthanol, 1,4-cyclohexanediméthanol, 2,2,4,4-tétraméthy-1,3-cyclobutanediol, p-xylylènediol, et des combinaisons de ceux-ci.

9. Fibre à multicomposants ayant une configuration à gaine-âme, ladite fibre à multicomposants comprenant :
(A) un composant de gaine comprenant au moins un sulfopolyester dispersible dans l'eau selon la revendication 1 et
(B) un composant d'âme comprenant au moins un polymère non hydrodispersible non miscible avec ledit sulfopolyester ;
dans lequel ladite fibre possède un tex de filament tel que filé inférieur à 6,67 dtex (denier tel que filé inférieur à 6 deniers par filament) ;

10. Fibre à multicomposants ayant une configuration à gaine-âme selon la revendication 9, dans laquelle ledit sulfopolyester dispersible dans l'eau présente une viscosité à l'état fondu inférieure à 600 Pa·s (6000 poises) mesurée à 240 °C à un taux de déformation de 1 rad/s.

11. Fibre à multicomposants ayant une configuration à gaine-âme selon la revendication 9, dans laquelle ladite fibre à multicomposants contient moins de 10 pour cent en poids d'un pigment ou d'une charge, sur la base du poids total de ladite fibre à multicomposants.

12. Fibre à multicomposants ayant une configuration à gaine-âme selon la revendication 9, dans laquelle ledit polymère non hydrodispersible est choisi dans le groupe constitué de polyoléfines, polyesters, polyamides, polylactides, polycaprolactones, polycarbonates, polyuréthanes, chlorures de polyvinyle, esters de cellulose et des combinaisons de ceux-ci.

13. Fibre à multicomposants ayant une configuration à gaine-âme selon la revendication 9, dans laquelle ledit polymère non hydrodispersible est biodésintégrable tel que déterminé par la norme DIN 54900 ou biodégradable tel que déterminé par le procédé normalisé ASTM, D6340-98.

14. Fibre à multicomposants ayant une configuration à gaine-âme selon la revendication 12, dans laquelle ledit polymère non hydrodispersible est un polyester aliphatique-aromatique.

15. Article fibreux comprenant la fibre à multicomposants selon la revendication 9.

16. Article fibreux selon la revendication 15, dans lequel ledit article fibreux est choisi dans le groupe constitué de fils, de tissus à multifilaments, de cordons, de tissus, de bandes soufflées en fusion, de bandes filées-liées, de bandes liées thermiquement, de bandes enchevêtrées par voie hydraulique, de bandes ou textiles non tissés, et de combinaisons de ceux-ci.

17. Articles fibreux selon la revendication 16, dans lesquels ledit article fibreux comprend une ou plusieurs couches de fibres hydrodispersibles, fibres à multicomposants ou fibres à microdenier.

18. Article fibreux selon la revendication 16, dans lequel ledit article est choisi dans le groupe constitué de produits de soins personnels, produits de soins de santé, produits d'hygiène féminine, lingettes, produits de nettoyage contenant des fibres, produits de soins médicaux et chirurgicaux, rubans, barrières protectrices, inserts pour divers produits d'hygiène personnelle et de nettoyage, et matériaux d'emballage.

19. Article fibreux selon la revendication 18, dans lequel lesdits produits de soins personnels, de soins de santé, d'hygiène féminine, et de soins médicaux et chirurgicaux sont choisis dans le groupe constitué de couches pour nourrisson, culottes d'apprentissage à la propreté pour enfants, couches pour adultes, serviettes de protection contre les fuites urinaires pour adultes, serviettes féminines, protège-slips, tampons, lingettes médicales, serviettes, gazes, couvre-lits d'examen, masques chirurgicaux, robes, bandages, pansements pour blessures et rubans.

20. Article fibreux selon la revendication 15, dans lequel ledit article fibreux est préimprégné avec diverses compositions liquides et utilisé pour délivrer lesdites compositions sur une surface.

21. Article fibreux selon la revendication 20, dans lequel lesdites compositions liquides sont choisies dans le groupe constitué de détergents, agents mouillants, agents de nettoyage, produits de soins de la peau, cosmétiques, onguents, médicaments, émollients et parfums.

22. Article fibreux selon la revendication 15, dans lequel ledit article fibreux comprend en outre au moins une poudre ou une matière particulaire.

23. Article fibreux selon la revendication 22, dans lequel ladite poudre ou particulaire est choisie dans le groupe constitué de talcs, amidons, divers absorbants d'eau, polymères hydrodispersibles ou gonflables à l'eau, silices, pigments et microcapsules.

24. Procédé de fabrication d'au moins une fibre à multicomposants ayant une configuration à gaine-âme, comprenant :
le filage d'au moins un sulfopolyester dispersible dans l'eau selon la revendication 1 et d'au moins un polymère non hydrodispersible non miscible avec ledit sulfopolyester pour produire ladite fibre à multicomposants, dans lequel ladite fibre à multicomposants comprend un composant d'âme et un composant de gaine ; dans lequel ledit composant d'âme comprend ledit polymère non hydrodispersible ; dans lequel ledit composant de gaine comprend ledit sulfopolyester dispersible dans l'eau ; dans lequel ladite fibre à multicomposants possède un tex de filament tel que filé inférieur à 6,67 dtex (denier tel que filé inférieur à 6 deniers par filament).
